# EUROPEAN PATENT APPLICATION

(11) **EP 1 006 696 A1**
(43) Date of publication of application: **07.06.2000**
(21) Application number: 99922576.6
(22) Date of filing: 28.05.1999
(51) Int. Cl.: H04L 12/56, G06F 13/00

(54) **METHOD AND APPARATUS FOR RELAYING DATA, COMMUNICATION SYSTEM, AND RECORDING MEDIUM**

(30) Priority: 29.05.1998 JP 14953898
(71) Applicant: Sony Corporation, Tokyo 141-0001 (JP)
(72) Inventor: NOMURA, Takashi, Sony Corporation, Tokyo 141-0001 (JP)
(74) Representative: Melzer, Wolfgang, Dipl.-Ing.
(86) International application number: JP9902864
(87) International publication number: WO9963717

(57) **Abstract**

In a digital video camera 3-1, a CIP header is appended to digital video data and an isochronous header is further appended thereto to form an isochronous packet, which is transmitted to an ATM/1394 bridge 61-1-1 through an IEEE1394 high-speed serial bus 10-1. In the ATM/1394 bridge 61-1-1, an ASEL-PDU 94 having no ASEL header is generated and an AAL5 trailer is appended thereto to form an AAL5 PDU 95, which is transferred to an ATM network 5. A digital video cassette recorder 4-1 connected to an IEEE1394 high-speed serial bus 11-1 carries out the reverse of the transmission-side processing, thus extracting digital video data.

## Description

### Technical Field

This invention relates to an information processing device and method, a communication system and a recording medium. Particularly, it relates to an information processing device and method, a communication system and a recording medium which enable easy communication between different networks without complicating the structure.

### Background Art

A device, method and system for transmitting data on an IEEE (Institute of Electrical and Electronics Engineers) 1394 high-speed serial bus through an ATM (asynchronous transfer mode) network are previously proposed by the present Assignee in the JP Patent Application No. Hei 8-82545 (not laid open as of May 29, 1998, which is the filing date of the parent application of the present application, JP Patent Application No. Hei 10-149358). Fig. 1 shows an exemplary structure of a system for transferring data on an IEEE1394 high-speed serial bus through an ATM network, as proposed in the previous application. An ATM/1394 bridge 1-1 is connected to a personal computer 2-1 through an IEEE1394 high-speed serial bus 7 and is also connected to an ATM network 5 through a UNI (user-network interface). The ATM/1394 bridge 1-1 transfers video data from a digital video camera 3 transmitted through the IEEE1394 high-speed serial bus 7, to the ATM network 5. An ATM/1394 bridge 1-2 is connected to a personal computer 2-2 trough an IEEE1394 high-speed serial bus 8 and is also connected to the ATM network 5 though the UNI. The ATM/1394 bridge 1-2 transfers video data from the digital video camera 3 transmitted through the ATM network 5, to the IEEE1394 high-speed serial bus 8.

The personal computer 2-1 is connected to the digital video camera 3 through an IEEE1394 high-speed serial bus 6 and transfers video data from the digital video camera 3 transmitted through the IEEE1394 high-speed serial bus 6, to the ATM/1394 bridge 1-1 through the IEEE1394 high-speed serial bus 7. The personal computer 2-2 is connected to a digital video cassette recorder 4 through an IEEE1394 high-speed serial bus 9 and transfers video data of the digital video camera 3 transmitted through the IEEE1394 high-speed serial bus 8, to the digital video cassette recorder 4 through the IEEE1394 high-speed serial bus 9.

An ASEL (ATM over IEEE1394 serial bus emulation layer) hierarchy for emulating an AAL5 (ATM adaptation layer type 5)/ATM layer (ITU-TI.363/ITU-TI.361) on IEEE1394 link layers of the ATM/1394 bridges 1-1, 1-2 and the personal computers 2-1, 2-2 will be described hereinafter.

The ASEL conceals the IEEE1394 high-speed serial bus from software of the hierarchy not lower than the ASEL of the device and emulates the AAL/ATM layer. Therefore, in the device having the ASEL mounted thereon, multiplexing and demultiplexing on the same UNI by a plurality of VPCs (virtual path connections)/VCCs (virtual channel connections) in ATM communication is made possible on the IEEE1394 high-speed serial bus interface of the device itself, and network access protocol software corresponding to the ATM network 5 and various application software can be directly used.

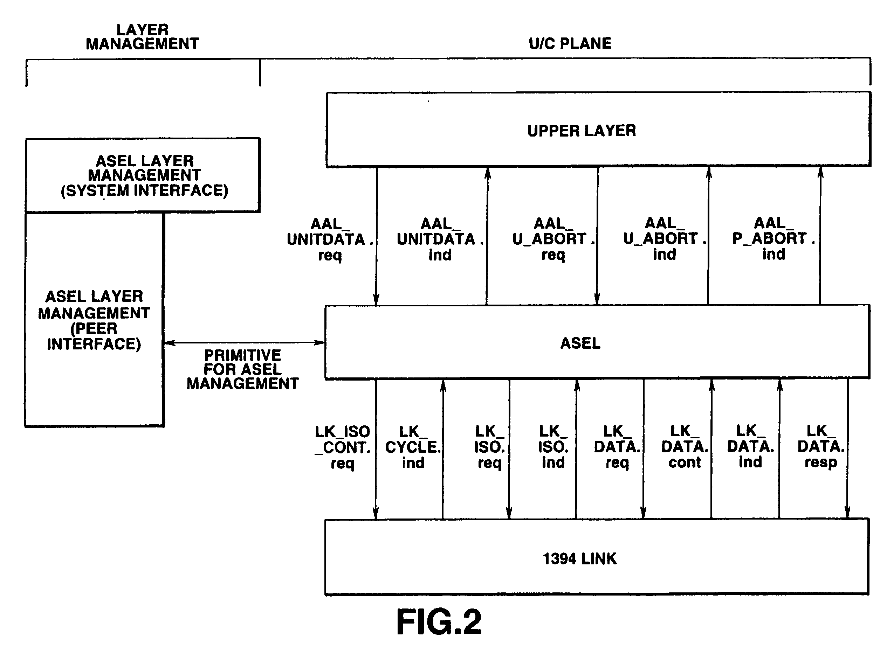

Fig.2 shows the relation of layers expressing the position of the ASEL. As shown in Fig.2, the ASEL provides primitives similar to those provided by various AALs, as primitives (transmission/receiving information for interlayer communication) with an upper layer. Specifically, the ASEL receives AAL_UNITDATA.req (request) from the upper layer and supplies AAL_UNITDATA.ind (indicate) thereto. Also, the ASEL receives AAL_U_ABORT.req and supplies AAL_U_ABORT.ind. Moreover, the ASEL receives supplies AAL_P_ABORT.ind to the upper layer. Thus, the software on the upper layer of the ASEL behaves similarly to the case where the lower layer is an AAL.

The ASEL directly uses the primitives provided from the IEEE1394 link layer, as primitives with the lower layer. Specifically, the ASEL supplies LK_ISO_CONT.req to the lower layer and receives LK_CYCLE.ind therefrom. Also, the ASEL supplies LK_ISO.req to the lower layer and receives LK_ISO.ind therefrom. Moreover, the ASEL supplies LK_DATA_req to the lower layer and receives LK_DATA.conf and LK_DATA.ind. Then, the ASEL supplies LK_DATA.resp to the lower layer.

Furthermore, the ASEL sends and receives ASEL management primitives including various management information such as configuration, trouble, performance and alarm concerning the ASEL entity of the counterpart and the ASEL entity of itself, with the local ASEL layer management entity of itself (peer interface). For example, if any anomaly is detected, predetermined management information is supplied to the peer interface and is outputted through the system interface to the ASEL entity of the counterpart. Control information of other ASEL entities is supplied to the ASEL through the system interface and the peer interface.

The primary functions of the ASEL will now be described. First, the ASEL entity can set a plurality of VPCs/VCCs on an isochronous channel. The ASEL entity of the ATM/1394 bridge 1-1 or 1-2 allocates an arbitrary VPI (virtual path identifier)/VCI (virtual channel identifier) value with respect to the VPC/VCC on the isochronous channel used by the personal computer 2-1 or 2-2 connected to the IEEE1394 high-speed serial bus interface housed in the ASEL entity itself through the IEEE1394 high-speed serial bus 7 or 8.

Moreover, the ASEL entity of the ATM/1394 bridge 1-1 allocates an arbitrary VPI/VCI value for each self-ID (for example, ID automatically appended in accordance with the IEEE1394 standard at the time of turning the power on) used as the counterpart node ID number by the personal computer 2-1 connected to the IEEE1394 high-speed serial bus interface housed in the ASEL entity itself through the IEEE1394 high-speed serial bus 7. The ASEL entity of the ATM/1394 bridge 1-2 allocates an arbitrary VPI/VCI value for each self-ID used as the counterpart node ID number by the personal computer 2-2 connected to the IEEE1394 high-speed serial bus interface housed in the ASEL entity itself through the IEEE1394 high-speed serial bus 8. Also, The ASEL entity performs setting and identification of a plurality of VPI/VCI values for each Dest-ID (destination ID) as the node ID number of the counterpart at the time of transmission, and for each Src-ID (source ID) as the node ID number of the ASEL entity itself at the time of reception. Various parameters concerning the VPC/VCC are set using the primitives sent to the ASEL layer management through the system interface.

Furthermore, the ASEL guarantees Qos (quality of service). Specifically, the ASEL carries out ATM CBR (constant bit rate) service using an IEEE1394 isochronous packet and carries out ATM UBR (unassigned bit rate) service and ABR (available bit rate) service using an IEEE1394 isochronous packet, thus guaranteeing Qos for users.

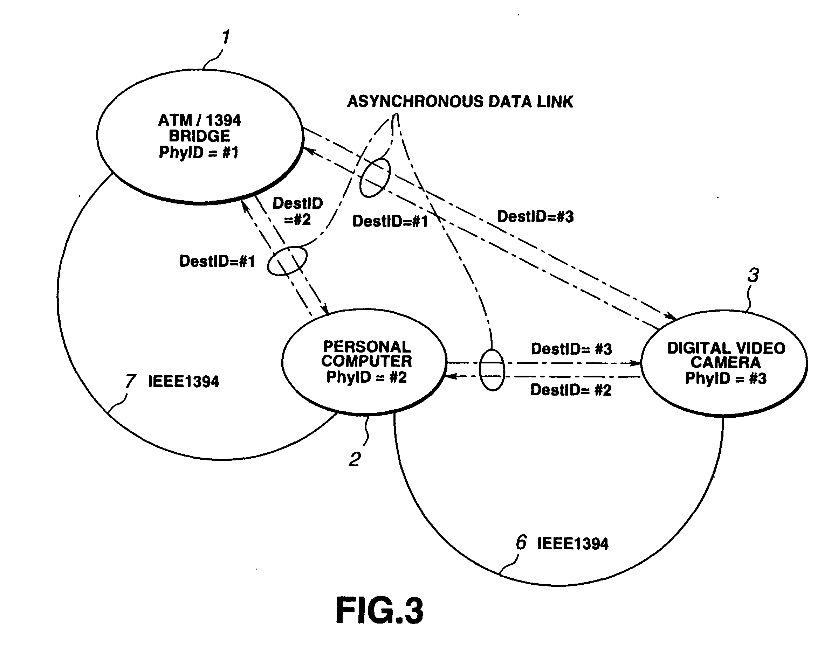

Asynchronous communication through the IEEE1394 high-speed serial bus will now be described. If no ASEL is provided, in asynchronous communication carried out on the 1394 link layer, a data link can only be identified by PhyID (physical ID) of the transmission source and PhyID of the destination, as shown in Fig.3. Therefore, only one asynchronous data link for transmission and only one asynchronous data link for reception can be formed on the same IEEE1394 high-speed serial bus. In the example of Fig.3, between the ATM/1394 bridge 1 and the personal computer 2 as a 1394 terminal, one link from the ATM/1394 bridge 1 to the personal computer 2 and one link from the personal computer 2 to the ATM/1394 bridge 1 are formed. Links are formed similarly between the ATM/1394 bridge 1 and the digital video camera 3 as a 1394 terminal and between the personal computer 2 and the digital video camera 3.

Therefore, in setting a plurality of connection for supplying/receiving the same type of application data streams, the setting by the upper layer of the 1394 link layer such as the ASEL is required.

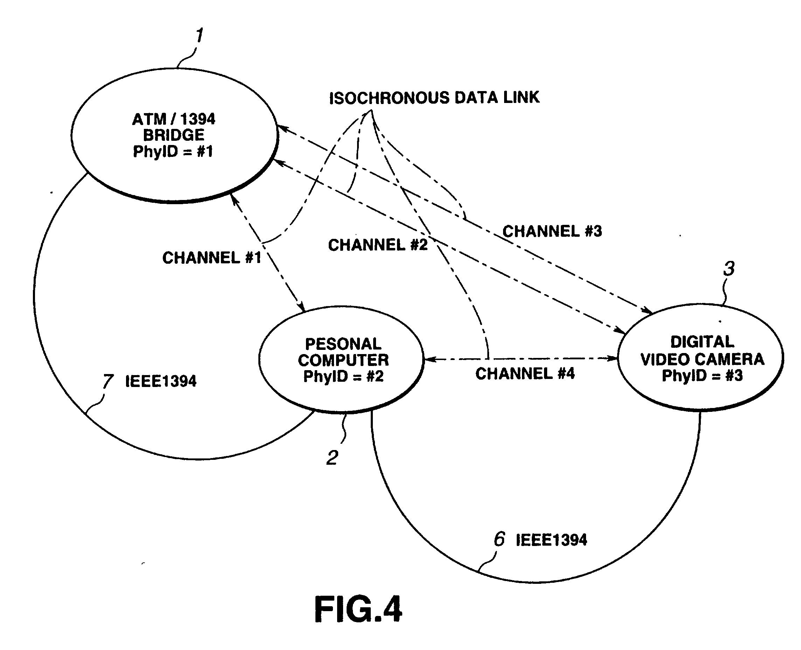

On the other hand, in isochronous communication through the IEEE1394 high-speed serial bus, as shown in Fig.4, a transmission device and receiving device can be identified in accordance with the isochronous channel. Therefore, by setting a plurality of channels between the transmission device and the receiving device on a single IEEE1394 high-speed serial bus, a plurality of connections for transmitting or receiving the same application data streams can be set. In the example of Fig.4, though only one channel is formed between the ATM/1394 bridge 1 and the personal computer 2 and between the personal computer 2 and the digital video camera 3, two channels are formed between the ATM/1394 bridge 1 and the digital video camera 3.

The previously proposed ASEL uses an ASEL-PDU (protocol data unit) of the same header format is used both in asynchronous communication and isochronous communication in order to enable multiplexing and demultiplexing of VCCs using the VPI/VCI of the ASEL header on one data link in both asynchronous communication and isochronous communication on the IEEE1394 high-speed serial bus. Therefore, the ASEL header is appended also in carrying out isochronous transfer.

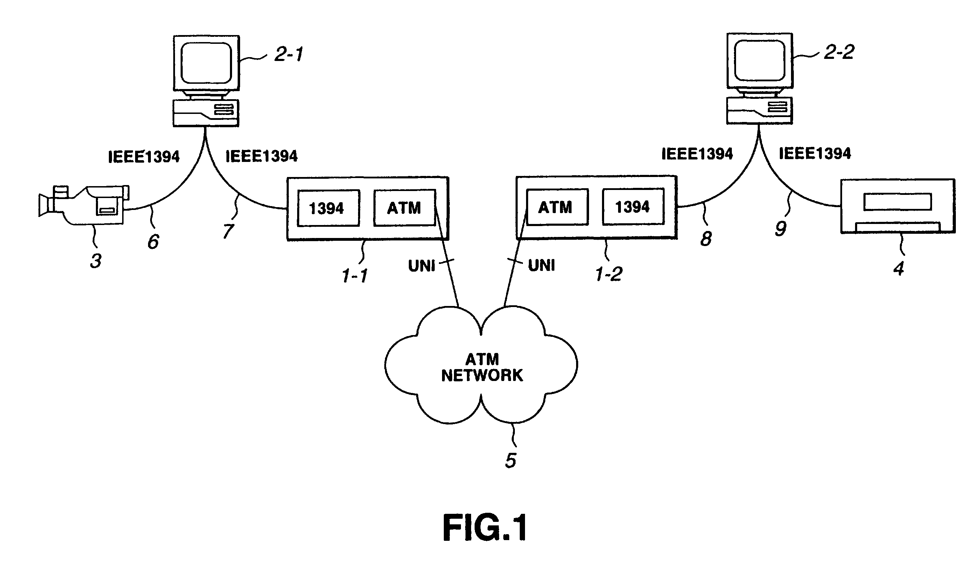

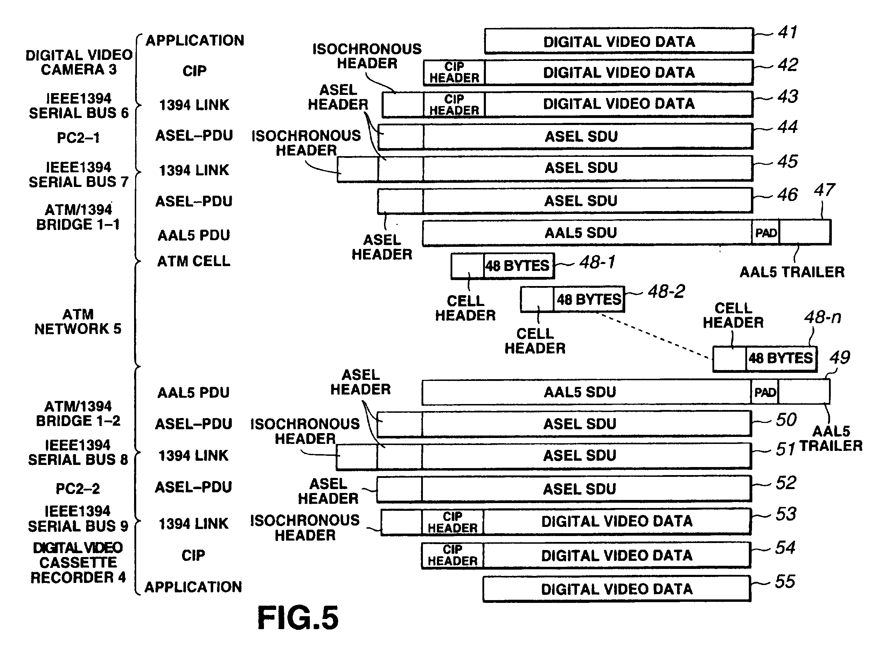

Fig.5 illustrates changes of data format in the case where digital video data is transmitted from the digital video camera 3 to the digital video cassette recorder 4 by isochronous communication using the ASEL in the exemplary structure shown in Fig. 1.

Digital video data 41 transmitted from the digital video camera 3 is converted to a common isochronous packet 42 having a CIP (common isochronous packet) header standardized by the 1394 TA (Trade Association) at its leading part. Next, to carry out isochronous communication, the common isochronous packet 42 is converted to an isochronous packet 43 having an isochronous header at its leading part by the link layer entity of the IEEE1394 high-speed serial bus interface and is then transmitted to the personal computer 2-1 through the IEEE1394 high-speed serial bus 6.

The ASEL entity of the personal computer 2-1 removes the isochronous header from the isochronous packet 43 to form an ASEL SDU (service data unit), in order to enable handling by the ATM/1394 bridge 1-1. While the PDU represents the entire data, the SDU represents payload, that is, information loaded down from the upper layer of the corresponding layer. The ASEL entity of the personal computer 2-1 appends an ASEL header to the ASEL SDU to form an ASEL-PDU 44. After that, the link layer entity of the IEEE1394 high-speed serial bus interface of the personal computer 2-1 appends an isochronous header to the ASEL-PDU 44 to form an isochronous packet 45. The isochronous packet 45 is transferred to the ATM/1394 bridge 1-1 through the IEEE serial bus 7.

The link layer entity of the IEEE1394 high-speed serial bus interface of the ATM/1394 bridge 1-1 removes the isochronous header from the isochronous packet 45 inputted thereto through the IEEE serial bus 7, thus forming an ASEL-PDU 46. The AAL5 entity of the ATM/1394 bridge 1-1 appends PAD (padding) and AAL5 trailer to the trailing part of the ASEL-PDU 46 to form an AAL5-PDU 47. The ATM layer entity of the ATM interface of the ATM/1394 bridge 1-1 splits the AAL5-PDU 47 into 48-byte units and appends a cell header to each of the 48-byte units, thus forming ATM cells 48-1 to 48-n. The ATM cells 48-1 to 48-n are transmitted to the ATM network 5 through the UNI and transferred to the ATM/1394 bridge 1-2.

From the ATM/1394 bridge 1-2 to the digital video cassette recorder 4, transmission of data is carried out in accordance with the reverse of the above-described procedures. Specifically, the ATM layer entity of the ATM interface of the ATM/1394 bridge 1-2 generates an AAL5-PDU 49 from the ATM cells 48-1 to 48-n. The AAL5-PDU 49 has its PAD and AAL5 trailer removed by the AAL5 and ASEL entities of the ATM/1394 bridge 1-2 and then has an ASEL header appended to its leading part to form an ASEL-PDU 50. An isochronous packet 51, formed by appending an isochronous header to the ASEL-PDU 50, is transmitted to the personal computer 2-2 through the IEEE1394 high-speed serial bus 8. The personal computer 2-2 deletes the ASEL header from the isochronous packet 51 to form an ASEL-PDU 52. The personal computer 2-2 appends an isochronous header again to the ASEL-PDU 52 to form an isochronous packet 53 and then transmits the isochronous packet 53 to the digital video cassette recorder 4 through the IEEE1394 high-speed serial bus 9. The digital video cassette recorder 4 removes the CIP header from a SDU (service data unit) 54 of the isochronous packet 53, thus extracting digital video data 55.

As described above, in transmitting the isochronous packet of the IEEE1394 high-speed serial bus through the ATM network, a packet of the ASEL-PDU format having the ASEL header appended thereto must be transferred on the IEEE1394 high-speed serial bus 7 between the personal computer 2-2 and the ATM/1394 bridge 1-2. Therefore, the digital video signal of the CIP format (packet of the CIP format) generated by the digital video camera 3 must be taken out once by the personal computer 2-1 and then encapsulated into the ASEL-PDU format.

As a result, the IEEE1394 high-speed serial bus 6 between the digital video camera 3 and the personal computer 2-1 and the IEEE1394 high-speed serial bus 7 between the personal computer 2-1 and the ATM/bridge 1-1 do not have the same format. Therefore, it is not necessary to use the same bus. Rather, since it is more desirable to separate the buses in view of bands, the IEEE1394 high-speed serial bus 6 and the IEEE1394 high-speed serial bus 7 are constituted as different buses.

Similarly, the personal computer 2-2 on the receiving side needs to take out the digital video signal of the CIP format encapsulated in the ASEL-PDU format isochronously transferred from the ATM/1394 bridge 1-2 and to isochronously transfer the digital video signal to the digital video cassette recorder 4. Therefore, similarly to the case of the transmission side, the IEEE1394 high-speed serial bus 8 between the ATM/1394 bridge 1-2 and the personal computer 2-2 and the IEEE1394 high-speed serial bus 9 between the personal computer 2-2 and the digital video cassette recorder 4 are constituted as different buses.

Although bands are secured in the previous proposition, it may be considered to prepare two IEEE1394 high-speed serial buses on each of the transmission side and the receiving side if there is some margin in the band. In this case, however, management of the isochronous channel and band must be caned out for each bus, thus complicating the management function. Also, the format conversion processing as described in Fig.5 is time-consuming and is disadvantageous in processing data requiring real-time property such as a video signal.

### Disclosure of the Invention

In view of the foregoing status of the art, it is an object of the present invention to enable simple and secure supply/reception of data between a plurality of IEEE1394 high-speed serial buses through the ATM network without complicating the structure of the IEEE1394 high-speed serial buses.

According to the present invention, communication channel identification information of another repeating installation of another communication device associated with communication channel identification information in a first format of communication data of the first format is read out from a storage, and the communication data of the first format is converted to communication data of a second format having the communication channel identification information of another repeating installation appended thereto and is then transmitted. Thus, it is possible to supply/receive data without complicating the structure of the first communication channel. Also, since the first communication channel need not be partitioned into a plurality of communication channels, the management thereof becomes easier and quick data communication is made possible.

Specifically, according to the present invention, there is provided a repeating installation in a communication system including a communication device and the repeating installation, the communication device having a function to communicate communication data of a first format using a first communication channel, the repeating installation being connected to the communication device, the repeating installation converting the communication data of the first format received from the communication device to a second format and transmitting the communication data of the second format using a second communication channel, thereby transmitting the communication data to another communication device trough another repeating installation as a target, the repeating installation comprising: first communication means connected to the first communication channel; second communication means connected to the second communication channel; first processing means for analyzing communication channel identification information in the first format included in the communication data of the first format; second processing means for analyzing communication channel identification information of the second format included in the communication data of the second format; and communication channel identification information storage means for associating with each other communication channel identification information of the communication device and communication channel identification information of said another repeating installation, obtained by communication channel identification information obtaining processing carried out prior to communication of the communication data, and then storing the communication channel identification information; the first processing means reading out from the communication channel identification information storage means the communication channel identification information of said another repeating installation of said another communication device associated with the communication channel identification information in the first format of the communication data of the first format received by the first communication means; the second processing means converting the communication data of the first format to the communication data of the second format to which the communication channel identification information of said another repeating installation read out by the first processing means is appended; the second communication means transmitting the communication data of the second format obtained by the second processing means.

According to the present invention, there is also provided a repeating method carried out by a repeating installation in a communication system including a communication device and the repeating installation, the method being adapted for converting communication data of a first format received from the communication device having a function to communicate the communication data of the first format using a first communication channel to a second format, then transmitting the communication data of the second format using a second communication channel, and transmitting the communication data to another communication device through another repeating installation as a target, the method comprising: associating with each other communication channel identification information of the communication device and communication channel identification information of said another repeating installation, obtained by communication channel identification information obtaining processing carried out prior to communication of the communication data, and then storing the communication channel identification information into storage means; receiving the first communication data from the first communication channel; reading out from the storage means the communication channel identification information of said another repeating installation of said another communication device associated with the communication channel identification information in the first format of the received communication data of the first format; converting the communication data of the first format to the communication data of the second format to which the communication channel identification information of said another repeating installation read out from the storage means is appended; and transmitting the communication data of the second format.

Furthermore, according to the present invention, there is also provided a recording medium in which a program for repeating by a repeating installation in a communication system including a communication device and the repeating installation is recorded and which is readable by a computer, the program being adapted for converting communication data of a first format received from the communication device having a function to communicate the communication data of the first format using a first communication channel to a second format, then transmitting the communication data of the second format using a second communication channel, and transmitting the communication data to another communication device through another repeating installation as a target, the program comprising: associating with each other communication channel identification information of the communication device and communication channel identification information of said another repeating installation, obtained by communication channel identification information obtaining processing carried out prior to communication of the communication data, and then storing the communication channel identification information into storage means; receiving the first communication data from the first communication channel; reading out from the storage means the communication channel identification information of said another repeating installation of said another communication device associated with the communication channel identification information in the first format of the received communication data of the first format; converting the communication data of the first format to the communication data of the second format to which the communication channel identification information of said another repeating installation read out from the storage means is appended; and transmitting the communication data of the second format.

Also, according to the present invention, communication channel identification information of another repeating installation of another communication device associated with communication channel identification information of a first format of communication data of first format is read out from storage means, and the communication data of the first format is converted to communication data of second format having the communication channel identification information of another repeating installation appended thereto and is then transmitted. Thus, it is possible to supply/receive data without complicating the structure of the first communication channel or the second communication channel. Also, since the first communication channel or the second communication channel need not be partitioned into a plurality of communication channels, the management thereof becomes easier and quick data communication is made possible.

Specifically, according to the present invention, there is provided a communication system in which a first communication device and a first repeating installation connected with each other through a first communication channel and a second communication device and a second repeating installation connected with each other through a second communication channel are connected each other through a third communication channel; the first communication device having a function to communicate communication data of a first format using the first communication channel; the second communication device having a function to communicate the communication data of the first format using the second communication channel; the first repeating installation being connected with the first communication device, the first repeating installation converting the communication data of the first format received from the first communication device to communication of a second format and then outputting the communication of the second format to the third communication channel, the first repeating installation converting communication data of the second format from the third communication channel to data of the first format and the outputting the data of the first format to the first communication channel; the second repeating installation being connected to the second communication device, the second repeating installation converting the communication data of the first format received from the second communication device to the second format and then outputting the communication data of the second format to the third communication channel, the second repeating installation converting communication data of the second format from the third communication channel to data of the first format and then outputting the data of the first format to the second communication channel; the first repeating installation comprising first communication means connected with the first communication channel, second communication means connected with the third communication channel, first processing means for analyzing communication channel identification information in the first format included in the communication data of the first format, second processing means for analyzing communication channel identification information in the second format included in the communication data of the second format, and first communication channel identification information storage means for associating with each other communication channel identification information of the communication device and communication channel identification information of the second repeating installation obtained by communication channel identification information obtaining processing carried out prior to communication of the communication data; the first processing means reading out from the first communication channel identification information storage means the communication channel identification information of the second repeating installation of the second communication device associated with the communication channel identification information in the first format of the communication data of the first format received by the first communication means; the second processing means converting the communication data of the first format to the communication data of the second format to which the communication channel identification information of the second repeating installation read out by the first processing means is appended; the second communication means transmitting the communication data of the second format obtained by the second processing means; the second repeating installation comprising third communication means connected with the second communication channel, fourth communication means connected with the third communication channel, third processing means for analyzing the communication channel identification information in the first format included in the communication data of the first format, fourth processing means for analyzing the communication channel identification information of the second format included in the communication data of the second format, and second communication channel identification information storage means for associating with each other the communication channel identification information of the communication device and the communication channel identification information of the first repeating installation obtained by communication channel identification information obtaining processing carried out prior to communication of the communication data; the third processing means reading out from the second communication channel identification information storage means the communication channel identification information of the second repeating installation of the second communication device associated with the communication channel identification information in the first format of the communication data of the first format received by the third communication means; the fourth processing means converting the communication data of the first format to the communication data of the second format to which the communication channel identification information of the first repeating installation read out by the third processing means is appended; the fourth communication means transmitting the communication data of the second format obtained by the fourth processing means.

Also, according to the present invention, it is designated whether a format for a processing section for carrying out processing for concealing a first network from an upper hierarchy is used in a first mode having a header or in a second mode having no header, and another information processing device is notified of the designation. Thus, it is possible to supply/receive data in cooperation with another information processing device without complicating the structure of the first network. Since the first network need not be partitioned into a plurality of networks, the management thereof becomes easier.

Specifically, according to the present invention, there is provided an information processing device connected with another information processing device trough a second network from a first network, the information processing device comprising: designation means for designating whether a format used for communication with said another information processing device and adapted for a processing section for carrying out processing for concealing the first network from an upper hierarchy and interfacing between the first network and the second network is used in a first mode having its header or in a second mode not having the header; and notification means for notifying said another information processing device of the designation by the designation means.

According to the present invention, there is also provided an information processing method for an information processing device connected with another information processing device through a second network from a first network, the method comprising: designating whether a format used for communication with said another information processing device and adapted for a processing section for carrying out processing for concealing the first network from an upper hierarchy and interfacing between the first network and the second network is used in a first mode having its header or in a second mode not having the header; and notifying said another information processing device of the designated mode.

According to the present invention, there is also provided a recording medium in which a program is recorded and which is readable by a computer, the program being adapted for causing the computer to execute processing as an information processing device connected with another information processing device through a second network from a first network, the program comprising designating whether a format used for communication with said another information processing device and adapted for a processing section for carrying out processing for concealing the first network from an upper hierarchy and interfacing between the first network and the second network is used in a first mode having its header or in a second mode not having the header, and notifying said another information processing device of the designated mode.

Also, according to the present invention, it is designated whether a format for a processing section for carrying out processing for concealing a first network from an upper hierarchy is used in a first mode having its header or in a second mode having no header, and a resource manager of the first network is notified of the designated mode and a resource of a second network. A resource of the first network allocated from the resource manager of the first network is stored in association with the resource of the second network. Thus, it is possible to carry out communication using the resources of the first network and the second network without complicating the structure of the first network.

Specifically, according to the present invention, there is provided an information processing device connected with first another information processing device through a second network from a first network, the information processing device comprising: designation means for designating whether a format used for communication with the first another information processing device and adapted for a processing section for carrying out processing for concealing the first network from an upper hierarchy and interfacing between the first network and the second network is used in a first mode having its header or in a second mode not having the header; notification means for notifying a resource manager of the first network of a resource of the second network used in communication with the first another information processing device together with the mode designated by the designation means; and storage means for receiving a notification of a resource of the first network allocated from the resource manager of the first network in association with the notification by the notification means and storing the received notification in association with the resource of the second network.

According to the present invention, there is also provided an information processing method for an information processing device connected with another information processing device through a second network from a first network, the method comprising: designating whether a format used for communication with said another information processing device and adapted for a processing section for carrying out processing for concealing the first network from an upper hierarchy and interfacing between the first network and the second network is used in a first mode having its header or in a second mode not having the header; notifying a resource manager of the first network of a resource of the second network used in communication with said another information processing device together with the designated mode; and receiving a notification of a resource of the first network allocated from the resource manager of the first network in association with the notification and storing the received notification in association with the resource of the second network.

According to the present invention, there is also provided a recording medium in which a program is recorded and which is readable by a computer, the program being adapted for causing the computer to execute processing as an information processing device connected with another information processing device through a second network from a first network, the program comprising: designating whether a format used for communication with said another information processing device and adapted for a processing section for carrying out processing for concealing the first network from an upper hierarchy and interfacing between the first network and the second network is used in a first mode having its header or in a second mode not having the header; notifying a resource manager of the first network of a resource of the second network used in communication with said another information processing device together with the designated mode; and receiving a notification of a resource of the first network allocated from the resource manager of the first network in association with the notification and storing the received notification in association with the resource of the second network.

Also, according to the present invention, a payload of a second format for a processing section for concealing a first network from an upper hierarchy is generated from data of a first format inputted through the first network, and the payload is converted to a third format for a second network and then outputted to the second network. Thus, it is possible to realize a system for outputting the data transferred from the first network to the second network without complicating the structure of the first network.

Specifically, according to the present invention, there is provided an information processing device connected with a first network and a second network, the information processing device comprising: receiving means for receiving data of a first format for the first network, inputted through the first network; generation means for removing a header of the first format from the data of the first format received by the receiving means and generating a payload of a second format for a processing section for carrying out processing for concealing the first network from an upper hierarchy and interfacing between the first network and the second network; and conversion means for converting the payload of the second format generated by the generation means to a third format for the second network and outputting the converted payload to the second network.

According to the present invention, there is also provided an information processing method for an information processing device connected with a first network and a second network, the method comprising: receiving data of a first format for the first network, inputted through the first network; removing a header of the first format from the received data of the first format and generating a payload of a second format for a processing section for carrying out processing for concealing the first network from an upper hierarchy and interfacing between the first network and the second network; and converting the generated payload of the second format to a third format for the second network and outputting the converted payload to the second network.

According to the present invention, there is also provided a recording medium in which a program is recorded and which is readable by a computer, the program being adapted for causing the computer to execute processing as an information processing method for an information processing device connected with a first network and a second network, the program comprising: receiving data of a first format for the first network, inputted through the first network; removing a header of the first format from the received data of the first format and generating a payload of a second format for a processing section for carrying out processing for concealing the first network from an upper hierarchy and interfacing between the first network and the second network; and converting the generated payload of the second format to a third format for the second network and outputting the converted payload to the second network.

Furthermore, according to the present invention, a payload of a second format for carrying out processing for concealing a second network from an upper hierarchy is generated from data of a first format inputted through a first network, and the payload is converted to a third format for the second network and then outputted to the second network. Thus, it is possible to realize a system for supplying/receiving data using the first network and the second network without complicating the structure of the second network.

Specifically, according to the present invention, there is provided an information processing device connected with a second network through a first network, the information processing device comprising: receiving means for receiving data of a first format for the first network, inputted through the first network; generation means for removing a header of the first format from the data of the first format received by the receiving means and generating a payload of a second format for a processing section for carrying out processing for concealing the second network from an upper hierarchy and interfacing between the first network and the second network; and conversion means for convening the payload of the second format generated by the generation means to a third format for the second network and outputting the converted payload to the second network.

According to the present invention, there is also provided an information processing method for an information processing device connected with a first network and a second network, the method comprising: receiving data of a first format for the first network, inputted through the first network; removing a header of the first format from the received data of the first format and generating a payload of a second format for a processing section for carrying out processing for concealing the second network from an upper hierarchy and interfacing between the first network and the second network; and converting the generated payload of the second format to a third format for the second network and outputting the converted payload to the second network.

According to the present invention, there is further provided a recording medium in which a program is recorded and which is readable by a computer, the program being adapted for causing the computer to execute processing as an information processing device connected with a first network and a second network, the program comprising: receiving data of a first format for the first network, inputted through the first network; removing a header of the first format from the received data of the first format and generating a payload of a second format for a processing section for carrying out processing for concealing the second network from an upper hierarchy and interfacing between the first network and the second network; and converting the generated payload of the second format to a third format for the second network and outputting the converted payload to the second network.

### Brief Description of the Drawings

Fig.1 shows an exemplary structure of a previously proposed network system.
Fig.2 illustrates the relation between layers representing the position of an ASEL.
Fig.3 illustrates connection by asynchronous communication on an IEEE1394 high-speed serial bus.
Fig.4 illustrates connection by isochronous communication on an IEEE1394 high-speed serial bus.
Fig.5 illustrates conversion of data format in transmitting data by isochronous communication.
Fig.6 shows the structure of a network system to which the present invention is applied.
Fig.7 is a block diagram showing the structure of hardware of an ATM/1394 bridge of Fig.6.
Fig.8 is a block diagram showing the structure of hardware of a personal computer of Fig.6.
Fig.9 shows a protocol stack on a U-plane.
Fig.10 shows a protocol stack on a C-plane.
Fig.11 is a flowchart for explaining connection control procedures for transferring digital video data.
Fig.12 shows the configuration of broadband high layer information elements.
Fig.13 illustrates a high layer information type.
Fig.14 shows the configuration of an IsoReq message.
Fig.15 shows the configuration of an IsoReq message.
Figs.16A and 16B illustrate optional mode information.
Fig.17 shows the configuration of an IsoRply message.
Figs.18A to 18D show the configuration of oMPR, oPCR, iMPR and iPCR.
Fig.19 illustrates the relation between a plug, a plug control register and an isochronous channel.
Fig.20 illustrates conversion of data format in transmitting data by isochronous communication according to the present invention.
Fig.21 illustrates the configuration of an isochronous packet.
Fig.22 shows the configuration of a CIP header.
Fig.23 illustrates the configuration of an isochronous data block packet.
Fig.24 illustrates the configuration of an ASEL-PDU.
Fig.25 illustrates the configuration of an AAL5.
Fig.26 is a flowchart for explaining the operation of receiving and transferring an isochronous packet of an ASEL entity of the ATM/1394 bridge of Fig.6.
Fig.27 shows tree topology.

### Best Mode for Carrying Out the Invention

A preferred embodiment of the present invention will now be described in detail with reference to the drawings.

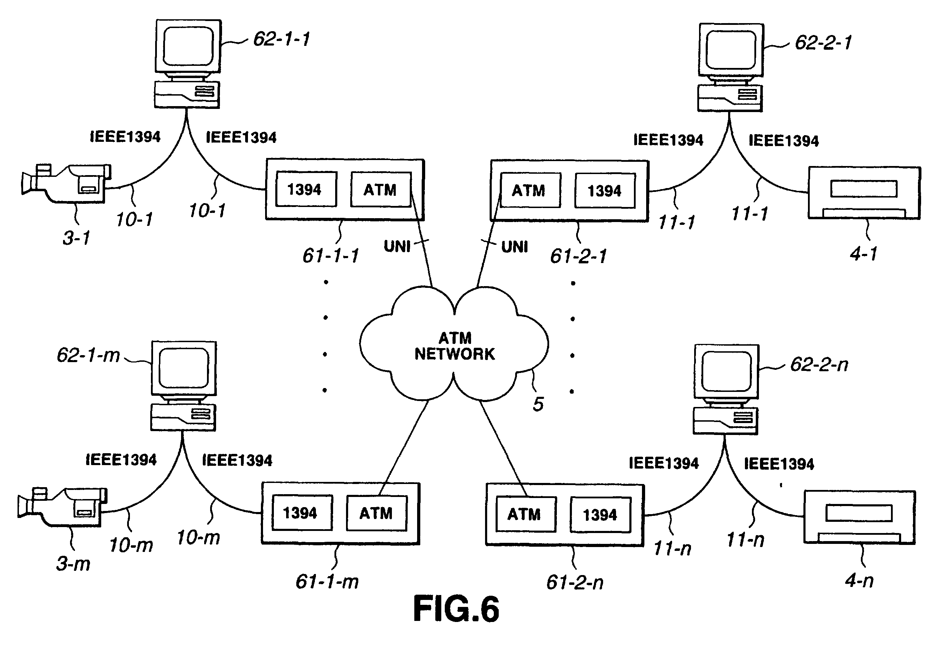

Fig.6 shows the structure of an embodiment of a network system to which the present invention is applied. An ATM/1394 bridge 61-1-1 is connected to a personal computer 62-1-1 through an IEEE1394 high-speed serial bus 10-1 and is also connected to an ATM network 5 through a UNI so as to transfer video data from a digital video camera 3-1 transmitted through the IEEE1394 high-speed serial bus 10-1 to the ATM network 5. An ATM/1394 bridge 61-2-1 is connected to a personal computer 62-2-2 through an IEEE1394 high-speed serial bus 11-1 and is also connected to the ATM network 5 through a UNI so as to transfer video data from the digital video camera 3-1 transmitted through the ATM network 5 to the IEEE1394 high-speed serial bus 11-1.

The personal computer 62-1-1 is connected to the digital video camera 3-1 through the IEEE1394 high-speed serial bus 10-1 so as to transfer video data from the digital video camera 3-1 transmitted through the IEEE1394 high-speed serial bus 10-1 to the ATM/1394 bridge 61-1-1 through the IEEE1394 high-speed serial bus 10-1. That is, the digital video camera 3-1, the personal computer 62-1-1 and the ATM/1394 bridge 61-1-1 are connected to the same IEEE1394 high-speed serial bus 10-1.

The personal computer 62-2-1 is connected to the ATM/1394 bridge 61-2-1 through the IEEE1394 high-speed serial bus 11-1 so as to transfer video data from the digital video camera 3-1 transmitted through the IEEE1394 high-speed serial bus 11-1 to a digital video cassette recorder 4-1 through the IEEE1394 high-speed serial bus 11-1. The ATM/1394 bridge 61-2-1, the personal computer 62-2-1 and the video cassette recorder 4-1 are connected to the same IEEE1394 high-speed serial bus 11-1.

In the above description, for simplification, data is transferred from one sub network system shown on the left side of the ATM network 5 to another sub network system shown on the right side of the ATM network 5. However, in the example of Fig.6, m units of sub network systems are connected to the left side of the ATM network 5 and n units of sub network systems are connected to the right side thereof. Practically, data can be transferred from an arbitrary sub network system to another arbitrary sub network system, of these sub network systems.

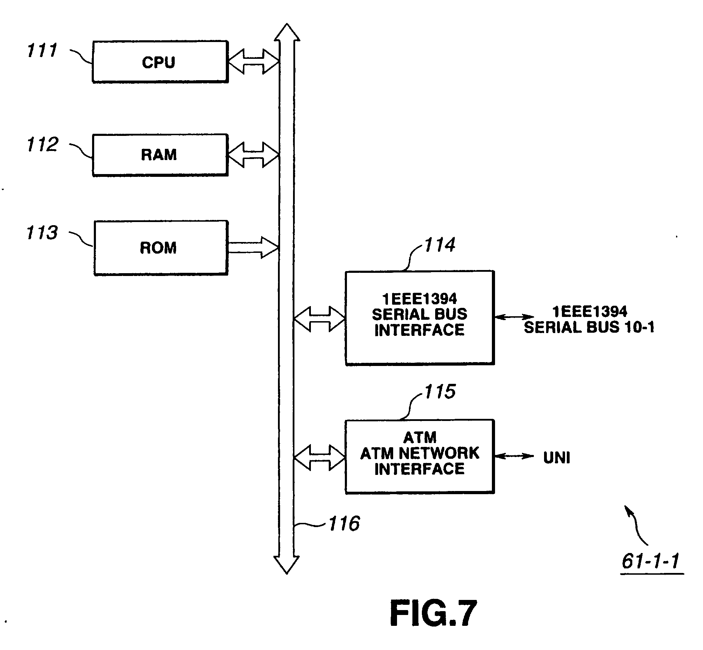

Fig.7 shows an example of the hardware structure of the ATM/1394 bridge 61-1-1. A CPU (central processing unit) 111 actually executes various programs. A RAM (random access memory) 112 stores programs used by the CPU 111 for executing various processing and parameters suitably changing in the execution. A ROM (read only memory) 113 basically stores fixed data of the programs and arithmetic processing parameters used by the CPU 111.

An IEEE1394 high-speed serial bus interface 114 is connected to the IEEE1394 high-speed serial bus 10-1. The IEEE1394 high-speed serial bus interface 114 adjusts data to a format required by the IEEE1394 high-speed serial bus 10-1 and outputs the adjusted data. Also, the IEEE1394 high-speed serial bus interface 114 receives a signal from the IEEE1394 high-speed serial bus 10-1 and extracts necessary data. An ATM network interface 115 is connected to the UNI by a predetermined communication medium (for example, a coaxial cable or an optical cable). The ATM network interface 115 adjusts data to a format required by the UNI and outputs the adjusted data. Also, the ATM network interface 115 receives a signal from the ATM network 5 through the UNI and extracts necessary data. The elements from the CPU 111 to the ATM network interface 115 are connected with each other by an internal bus 116.

The hardware structure of ATM/1394 bridges 61-1-i (i = 1,2,3, ...,m) and 61-2-j (j = 1,2, ...,n) is similar to the hardware structure of the ATM/1394 bridge 61-1-1 and therefore will not be described further in detail.

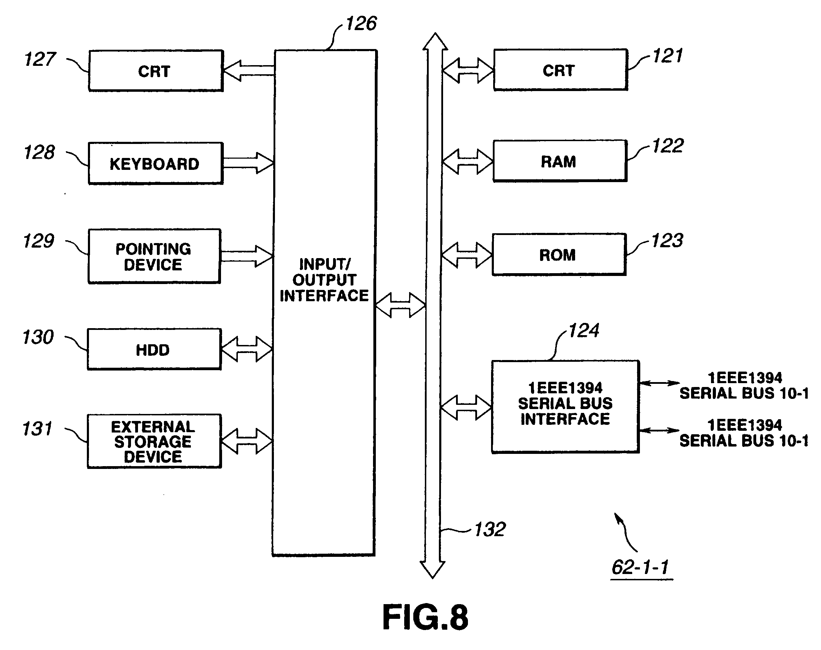

Fig.8 shows an example of the hardware structure of the personal computer 62-1-1. A CPU 121, a RAM 122 and a ROM 123 are similar to the CPU 111, the RAM 112 and the ROM 113 of Fig.7 and therefore will not be described further in detail. An IEEE1394 high-speed serial bus interface 124 is connected to the IEEE1394 high-speed serial bus 10-1. The IEEE1394 high-speed serial bus interface 124 adjusts data to a format required by the IEEE1394 high-speed serial bus 10-1 and outputs the adjusted data. Also, the IEEE1394 high-speed serial bus interface 124 receives a signal from the IEEE1394 high-speed serial bus 10-1 and extracts necessary data.

A CRT (cathode-ray tube) 127, a keyboard 128, a pointing device 129 such as a mouse or a track ball, a HDD (hard disk drive) 130, and an external storage device 131 such as a disk drive or a tape drive are connected to an internal bus 132 through an input/output interface 126. The CRT 127 displays display data supplied from the CPU 121. The keyboard 128 supplies a signal corresponding to the operation by a user to the CPU 121. The pointing device 129 such as a mouse or a track ball supplies a predetermined signal to the CPU 121 in accordance with the operation by the user corresponding to the display on the CRT 127. The HDD 130 and the external storage device 131 store programs which are read out and store into the RAM 123 when the CPU 121 executes the programs, parameters and data necessary for the execution, and data inputted or outputted through the IEEE1394 high-speed serial bus interface 124.

The CPU 121, the RAM 122, the ROM 123, the IEEE1394 high-speed serial bus interface 124 and the input/output interface 126 are connected to each other through the internal bus 132.

The hardware structure of personal computers 62-1-i (i = 2,3, ...,m) and 62-2-j (j = 1,2, ...,n) is similar to the hardware structure of the personal computer 62-1-1 and therefore will not be described further in detail.

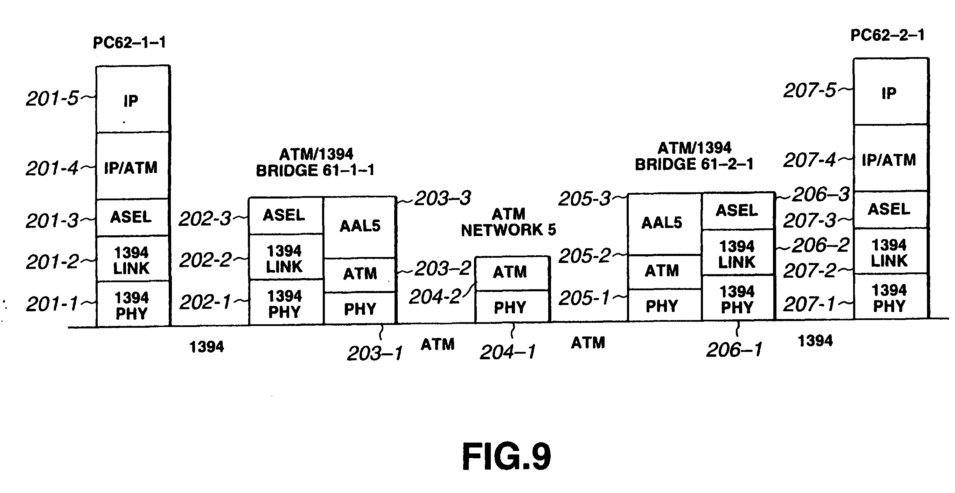

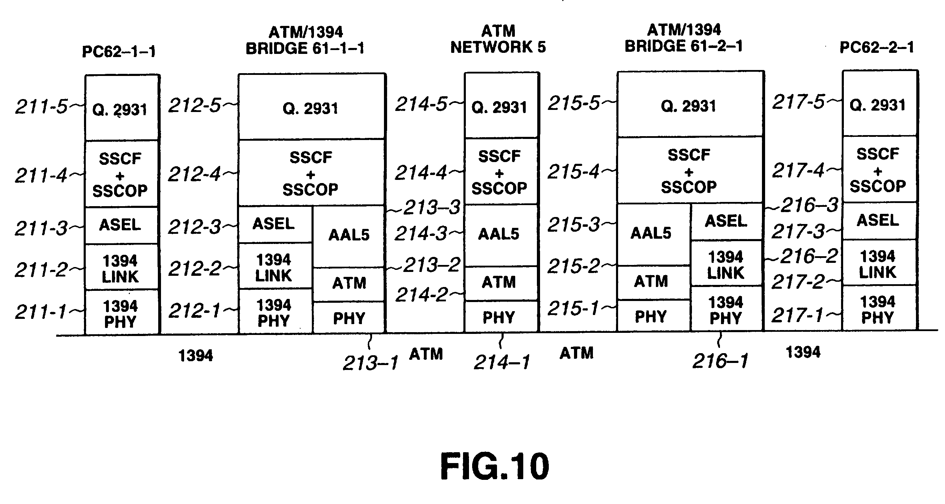

In carrying out communication between the personal computers 62-1-1 and 62-2-1 shown in Fig.6, protocol stacks on a U (user)-plane and a C (control)-plane are laid out as shown in Figs.9 and 10, respectively.

As shown in Fig.9, the protocol stack on the U-plane of the personal computer 62-1-1 is constituted by a 1394PHY (physical) layer 201-1, a 1394 link layer 201-2, an ASEL layer 201-3, an IP/ATM layer 201-4 and an IP layer 201-5. The protocol stack on the U-plane of the ATM/1394 bridge 61-1-1 on the side of the personal computer 62-1-1 is constituted by a 1394PHY layer 202-1, a 1394 link layer 202-2 and an ASEL layer 202-3, and the protocol stack on the U-plane of the ATM/1394 bridge 61-1-1 on the side of the ATM network 5 is constituted by a PHY layer 203-1, an ATM layer 203-2 and an AAL5 layer 203-3. The protocol stack on the U-plane of the ATM network 5 is constituted by a PHY layer 204-1 and an ATM layer 204-2.

The protocol stack on the U-plane of the ATM/1394 bridge 61-2-1 on the side of the ATM network 5 is constituted by a PHY layer 205-1, an ATM layer 205-2 and an AAL5 layer 205-3, and the protocol stack on the U-plane of the ATM/1394 bridge 61-2-1 on the side of the personal computer 62-2-1 is constituted by a 1394PHY layer 206-1, a 1394 link layer 206-2 and an ASEL layer 206-3. The protocol stack on the U-plane of the personal computer 62-2-1 is constituted by a 1394PHY layer 207-1, a 1394 link layer 207-2, an ASEL layer 207-3, an IP/ATM layer 207-4 and an IP layer 207-5.

The AAL/ATM is emulated by the ASEL layer 201-3 and the ASEL layer 202-3 between the personal computer 62-1-1 and the ATM/1394 bridge 61-1-1 and by the ASEL layer 206-3 and the ASEL layer 207-3 between the ATM/1394 bridge 61-2-1 and the personal computer 62-2-1, and the concept of VPC/VCC exists. Therefore, a packet on the U-plane can be handled in accordance with the VPI/VCI value.

On the other hand, as shown in Fig. 10, the protocol stack on the C-plane of the personal computer 62-1-1 is constituted by a 1394PHY layer 211-1, a 1394 link layer 211-2, an ASEL layer 211-3, an SSCF(ITU-TQ.2130)+SSCOP(ITU-TQ.2110) layer 211-4 and a Q.2931(ITU-TQ.2931) layer 211-5. The protocol stack on the C-plane of the ATM/1394 bridge 61-1-1 on the side of the personal computer 62-1-1 is constituted by a 1394PHY layer 212-1, a 1394 link layer 212-2, an ASEL layer 212-3, an SSCF+SSCOP layer 212-4 and a Q.2931 layer 212-5. On the other hand, the protocol stack on the C-plane of the ATM/1394 bridge 61-1-1 on the side of the ATM network 5 is constituted by a PHY layer 213-1, an ATM layer 213-2, an AAL5 layer 213-3, the SSCF+SSCOP layer 212-4 and the Q.2931 layer 212-5. The protocol stack on the C-plane of the ATM network is constituted by a PHY layer 214-1, an ATM layer 214-2, an AAL5 layer 214-3, an SSCF+SSCOP layer 214-4 and a Q.2931 layer 214-5.

The protocol stack on the C-plane of the ATM/1394 bridge 61-2-1 on the side of the ATM network 5 is constituted by a PHY layer 215-1, an ATM layer 215-2, an AAL5 layer 215-3, an SSCF+SSCOP layer 215-4 and a Q.2931 layer 215-5. On the other hand, the protocol stack on the C-plane of the ATM/1394 bridge 61-2-1 on the side of the personal computer 62-2-1 is constituted by a 1394PHY layer 216-1, a 1394 link layer 216-2, an ASEL layer 216-3, the SSCF+SSCOP layer 215-4 and the Q.2931 layer 215-5. The protocol stack on the C-plane of the personal computer 62-2-1 is constituted by a 1394PHY layer 217-1, a 1394 link layer 217-2, an ASEL layer 217-3, an SSCF+SSCOP layer 217-4 and a Q.2931 layer 217-5.

The signaling protocol used by the UNI (user-network interface) of the ATM network 5 can be applied by the ASEL layer 211-3 and the ASEL layer 212-3 between the personal computer 62-1-1 and the ATM/1394 bridge 61-1-1 and by the ASEL layer 216-3 and the ASEL layer 217-3 between the ATM/1394 bridge 61-2-1 and the personal computer 62-2-1.

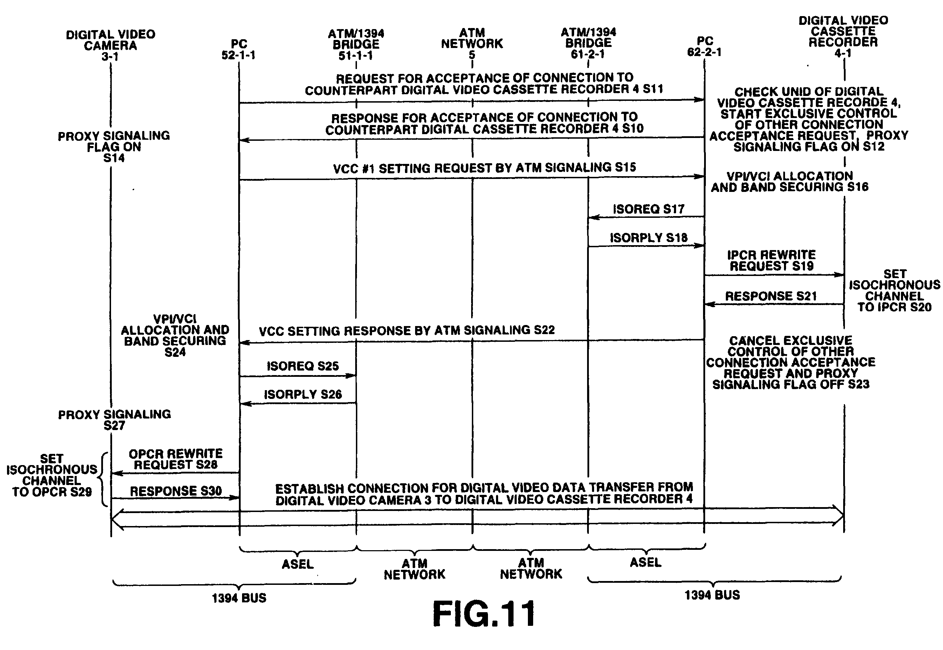

Referring to the flowchart of Fig.11, connection control procedures for transferring digital video data from the digital video camera 3-1 to the digital video cassette recorder 4-1 will now be described. In this description, the personal computer 62-1-1 and the personal computer 62-2-1 carry out connection control in place of the digital video camera 3-1 and the digital video cassette recorder 4-1, respectively.

At step S11, the personal computer 62-1-1 transmits a request for acceptance of connection to the digital video cassette recorder 4-1 to the personal computer 62-2-1 connected to the same IEEE1394 high-speed serial bus 11-1 as the digital video cassette recorder 4-1, which is the counterpart, in order to carry out exclusive control of connection setting. This processing can be carried out, for example, as disclosed in the JP Patent Application No.Hei 8-82545.

At step S12, on confirmation of the node unique ID (identification) (which is allocated in advance to all the devices using the IEEE1394 high-speed serial bus) of the digital video cassette recorder 4-1, the personal computer 62-2-1 starts exclusive control of another connection acceptance request and sets a Proxy Signaling flag on, which indicates execution of signaling procedure of the ATM, in place of the digital video cassette recorder 4-1. At step S13, the personal computer 62-2-1 transmits response indicating acceptance of connection to the digital video cassette recorder 4-1 to the personal computer 62-1-1.

At step S14, the personal computer 62-1-1 sets a Proxy Signaling flag on, which indicates execution of signaling procedure of the ATM, in place of the digital video camera 3-1, and starts execution of the ATM signaling procedure. At step S15, the personal computer 62-1-1 transmits a VCC setting request message to the personal computer 62-2-1. The personal computer 62-1-1 explicitly states in the VCC setting request message that the digital video data using the CIP is sent through the connection. This can be defined, for example, as the user-specific type of broadband high layer information elements in a SetUp message of ITU-T Q.2931 used in signaling.

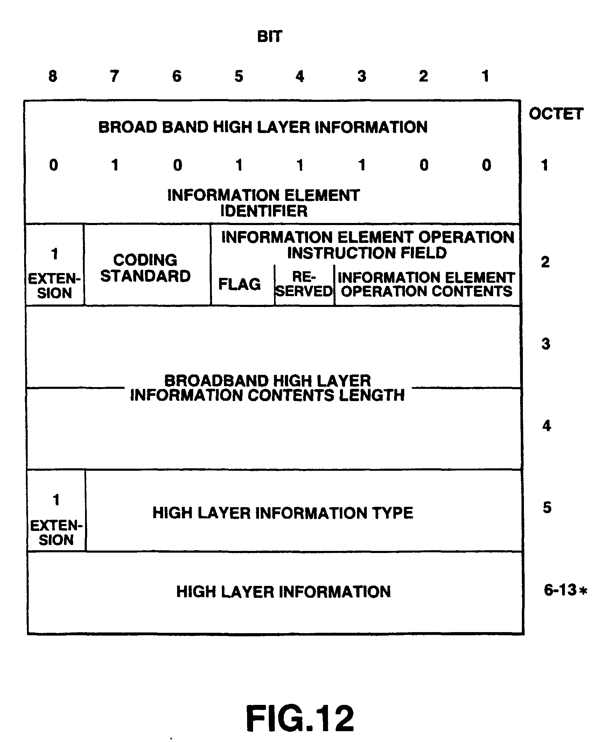

The broadband high layer information elements are adapted for providing the function to check the possibility of communication to an address-designated entity and are constituted as shown in Fig.12. An information element identifier is arranged in the leading octet. In the next octet, an extension flag is arranged for MSB and coding standard data is arranged for the next two bits while the remaining five bits are used as an information element operation instruction field.

One bit on the MSB side of the five-bit information element operation instruction field is set to 1 if an explicit operation instruction is followed (that is, the general error processing procedure is not applied), and 0 if the information element operation instruction field has no meaning (that is, the general error processing procedure is applied).

The next one bit is reserved for a passalong request and is normally coded to 0 (if there is not passalong request).

The last three bits are set to 000 in the case of call opening, 001 in the case of information element abandonment and processing continuation, 010 in the case of information element abandonment, processing continuation and status reporting, 101 in the case of message abandonment and ignoring, and 110 in the case of message abandonment and status reporting. In other cases, these bits are reserved.

The third and fourth octets are arranged as broadband high layer information contents length. The MSB of the fifth octet is arranged as an extension flag and the remaining seven bits are arranged as the high layer information type. The octets from the sixth octet up to the 13th octet are arranged as high layer information.

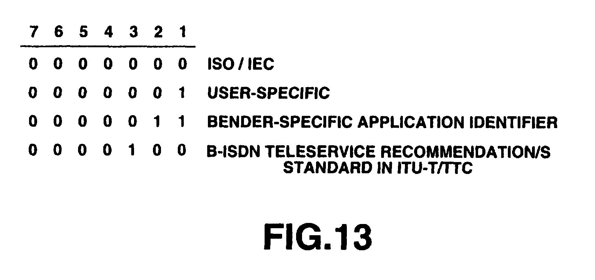

In the high layer information type of the fifth octet, information as shown in Fig.13 is arranged. A code having 0 for all the seven bits is reserved for the use in accordance with the ISO/IEC standard. A code having 0 for upper six bits of the seven bits and 1 for the LBS is a user-specific code. If this code is used, the coding method for the sixth to 13th octets can be defined by the user. The use of the code need be determined on the basis of the agreement between end users.

A code having 0 for upper five bits of the seven bits and 1 for lower two bits is a bender-specific application identifier. A code having 1 for the third bit from the LSB side of the seven bits and 0 for the remaining bits is prescribed in conformity to the B-ISDN teleservice recommendation/standard of the ITU-T/TTC. The other seven-bit codes are reserved.

On accepting the VCC setting request, at step S16, the personal computer 62-2-1 sets VCC parameters such as VPI/VCI, a Q0S type parameter (in this case, CBR (constant bit rate), an AAL type parameter(in this case, AAL5), an isochronous packet encapsulation system parameter (in this case, CIP format), and a transmission/reception parameter, for the ASEL entity of itself. As the transmission/reception band parameter, "0" is set so as not to receive digital video data on the VCC since the previously set Proxy Signaling flag is on.

At step S17, the personal computer 62-2-1 transmits an IsoReq message as ASEL-CMP (connection management protocol) to the ATM/1394 bridge 61-2-1 as the isochronous resource manager of the IEEE1394 high-speed serial bus 11-1 in order to request allocation of an isochronous channel corresponding to the VPI/VCI allocated to the VCC, and thus requests allocation of the isochronous channel corresponding to the VPI/VCI allocated to the VCC.

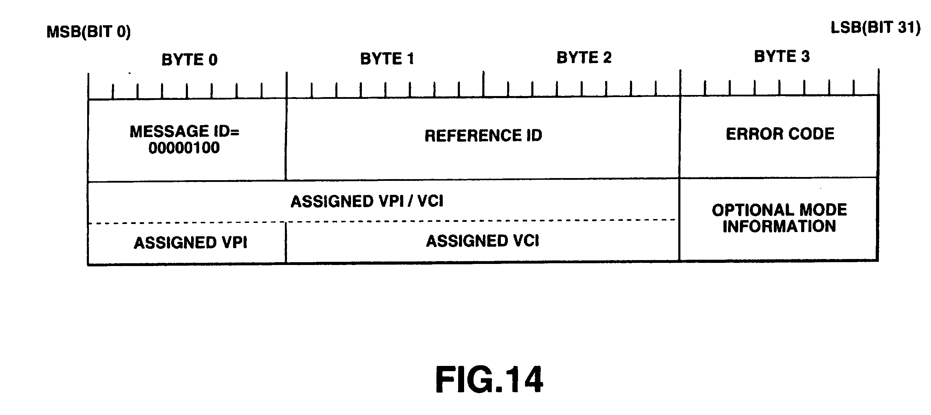

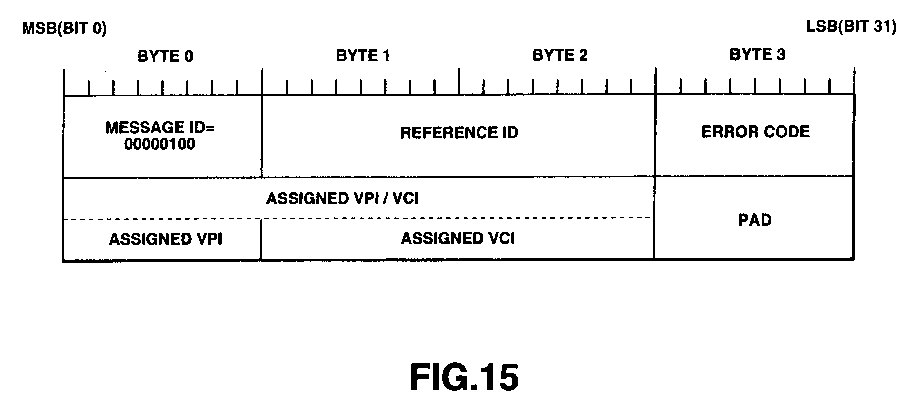

Fig.14 shows the configuration of the IsoReq message. The IsoReq message is constituted by Message ID (in the case of IsoReq message, "00000100") for specifying the contents of the message, Reference ID, Error Code, Assigned VPI/VCI indicating allocation of VPI and allocation of VCI, and Optical Mode Information. Assigned VPI/VCI is constituted by three bytes, that is, the leading one byte for Assigned VPI and the remaining two bytes for Assigned VCI. Optional Mode Information is an extension of the previously proposed portion where padding data (PAD) is arranged, as shown in Fig.15.

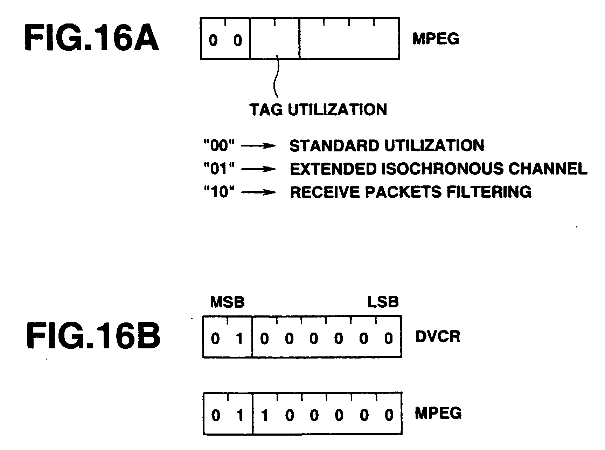

For two bits on the MSB side of this Optional Mode Information of one byte, the encapsulation system is arranged in response to input (designation) from the keyboard 128 or the pointing device 129 of the user. In the case of the ASEL-PDU format, the value of the two bits is "00" as shown in Fig.16A. In the case of the CIP format, the value of the two bits is "01" as shown in Fig.16B. If the two bits on the MSB side express the CIP format, the six bits on the LSB side represent the application ID, for example, "000000" for DVCR and "100000" for MPEG.

On the other hand, if the two bits on the MSB side are "00" (ASEL-PDU format), the upper two bits represent Tag Utilization, for example, "00" for Standard Utilization, "01" for Extended Isochronous Channel, and "10" for Receive Packets Filtering.

Since the ASEL entity of the personal computer 62-2-1 sets the parameter for the VCC isochronous packet encapsulation system indicating the CIP format at step S16 of Fig.11, an IsoReq message in which Optional Mode Information is set at a value corresponding to the system (that is, two bits on the MSB side are set as "01" and the remaining six bits are set as "000000" for DVCR or "100000" for MPEG) can be transmitted to the ATM/1394 bridge 61-2-1 at step S17. By receiving the IsoReq message, the ATM/1394 bridge 61-2-1 similarly recognizes that the VCC isochronous packet encapsulation system is the CIP format.

At step S18, the ATM/1394 bridge 61-2-1 obtains an isochronous channel on the IEEE1394 high-speed serial bus 11-1 and transmit an IsoRply message to the personal computer 62-2-1. In this case, the ASEL entity of the ATM/1394 bridge 61-2-1 associates the VPI/VCI of the VCC with the obtained isochronous channel in a one-to-one correspondence and registers them to the IsoRply.

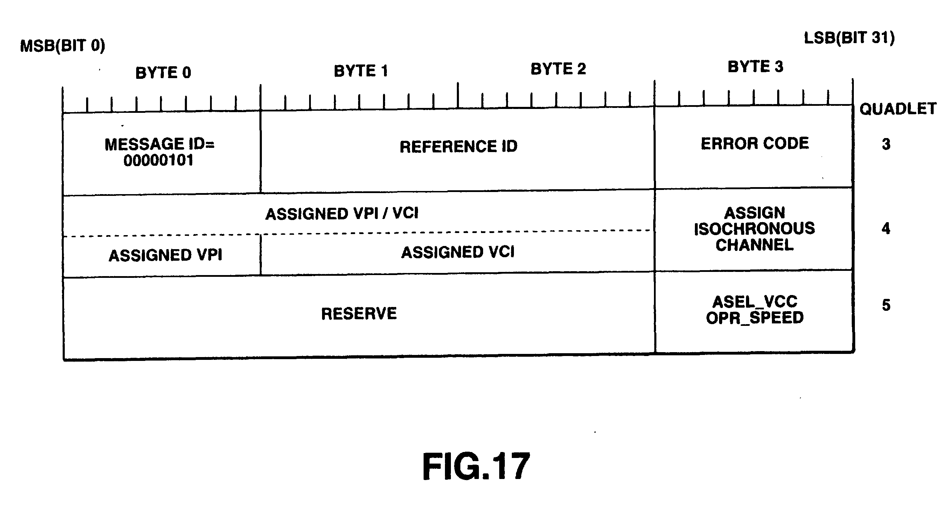

Fig.17 shows the format of the IsoRply message. As shown in Fig.17, Message ID (having a value of "00000100"), Reference ID, Error Code, Assigned VPI/VCI, Assign Isochronous Channel, and ASEL-VCC Opr_Speed are described in IsoRply. In Assign Isochronous Channel, the isochronous channel determined by the ATM/1394 bridge 61-2-1 is described. In Assigned VPI/VCI, the same value as that of Assigned VPI/VCI of IsoReq of Fig.14 is described. That is, the VPI/VCI and the isochronous channel corresponding thereto can be known from this IsoRply of Fig.17.

At step S19, the personal computer 62-2-1 requests rewrite of iPCR (input Plug Control Register) so as to enable reception of the obtained isochronous channel to the digital video cassette recorder 4-1. This iPCR will now be described.

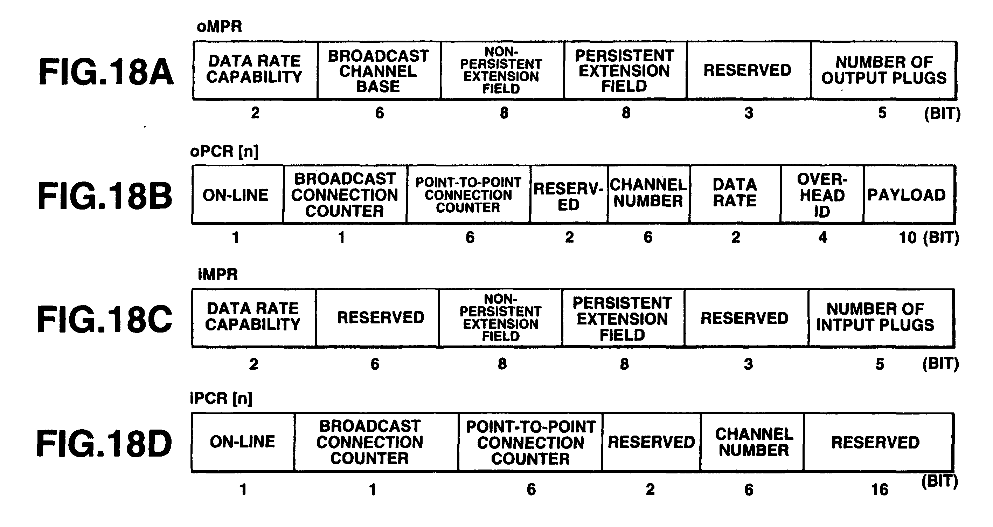

Figs.18A to 18D show the configuration of oMPR (output Master Plug Register), oPCR (output Plug Control Register), iMPR (input Master Plug Register), and iPCR (input Plug Control Register). Fig.18A shows the configuration of oMPR. Fig.18B shows the configuration of oPCR. Fig.18C shows the configuration of iMPR. Fig.18D shows the configuration of iPCR. In the data rate capability of two bits on the MSB side of oMPR and iMPR, a code indicating the maximum transmission speed of isochronous data that can be transmitted or received by the equipment is stored. The broadcast channel base of oMPR prescribes the channel number used for broadcast output.

In the number of output plugs of five bits on the LSB side of oMPR, the number of output plugs provided in the equipment, that is, a value indicating the number of oPCR, is stored. In the number of input plugs of five bits on the LSB side of iMPR, the number of input plugs provided in the equipment, that is, a value indicating the number of iPCRs, is stored. The non-persistent extension field and the persistent extension field are fields defined for future extension.

The on-line of the MSB of oPCR and iPCR indicates the status of use of the plug. Specifically, if its value is 1, the plug is on-line. If its value is 0, the plug is off-line. The value of the broadcast connection counter of oPCR and iPCR indicates the presence (1) or the absence (0) of broadcast connection. The value of the point-to-point connection counter having a six-bit width of oPCR and iPCR represents the number of point-to-point connections of the plug.

The value of the channel number having a six-bit width of oPCR and iPCR represents the isochronous channel number of the isochronous channel connected with the plug. The value of the data rate having a two-bit width of oPCR indicates the real transmission speed of an isochronous data packet outputted from the plug. The code stored in the overhead ID having a four-bit width of oPCR indicates the bandwidth of overhead of isochronous communication. The value of the payload having a 10-bit width of oPCR represents the maximum value of data included in an isochronous packet that can be handled by the plug.

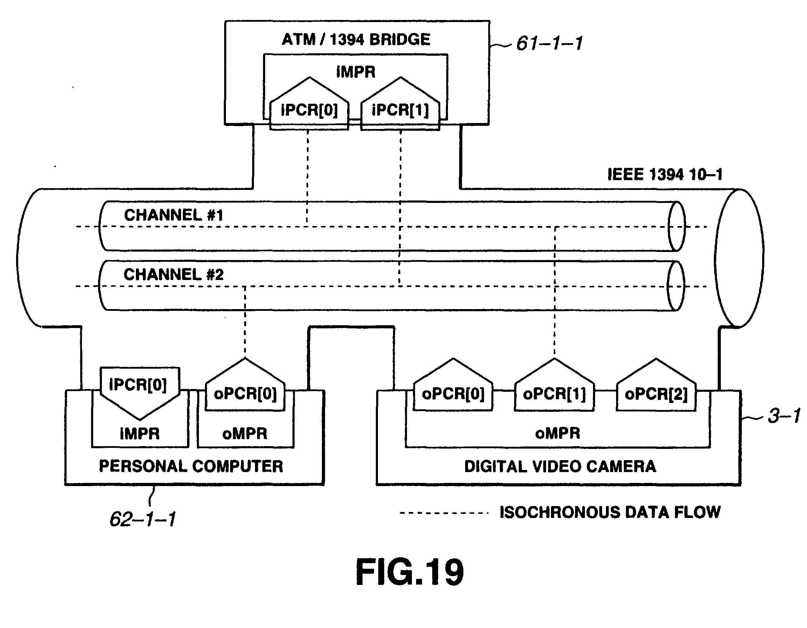

Fig.19 shows the relation between the plug, the plug control register and the isochronous channel. Isochronous data having its channel designated by oPCR[1], of oPCR[0] to oPCR[2] having the transmission speed and the number of oPCRs prescribed by oMPR Of the digital video camera 3-1, is transmitted to a channel #1 of the IEEE1394 high-speed serial bus 10-1. In accordance with iPCR[0] having an input channel #1 designated thereto, of iPCR[0] and iPCR[1] having the transmission speed and the number of iPCRs prescribed by iMPR of the ATM/1394 bridge 61-1-1, the ATM/1394 bridge 61-1-1 reads the isochronous data transmitted to the channel #1 of the IEEE1394 high-speed serial bus 10-1. Similarly, the personal computer 62-1-1 transmits isochronous data to a channel #2 designated by oPCR[0], and the ATM/1394 bridge 61-1-1 reads the isochronous data from a channel #2 designated by iPCR[1].

The details of oPCR, iMPR, oMPR as well as iPCR are disclosed in the JP Patent Application No.Hei 10-128475 (not laid open as of May 29, 1998, the filing date of the JP Patent Application No.Hei 10-149358, which is the parent application of the present Application).

Referring again to Fig.11, at step S20, the digital video cassette recorder 4-1 carries out setting of an isochronous channel for iPCR. At step S21, the digital video cassette recorder 4-1 transmits a response to the effect that the isochronous channel is set for iPCR to the personal computer 62-2-1.

At step S22, the personal computer 62-2-1 transmits a VCC setting response message to the personal computer 62-1-1. At step S23, the personal computer 62-2-1 cancels the exclusive control of another connection acceptance request and sets a Proxy Signaling flag on, which indicates execution of the ATM signaling procedure, in place of the digital video cassette recorder 4-1.

At step S24, on receiving the VCC setting response message, the personal computer 62-1-1 sets VCC parameters such as VPI/VCI, a Q0S type parameter (in this case, CBR), an AAL type parameter (in this case, AAL5), an isochronous packet encapsulation system parameter(in this case, CIP format)and a transmission/reception parameter, for the ASEL entity of itself. In this case, "0" is set for the transmission/reception band parameter so as not to receive digital video data on the VCC since the previously set Proxy Signaling flag is on.

At step S25, the personal computer 62-1-1 transmits an IsoReq message, which is ASEL-CMP, to the ATM/1394 bridge 61-1-1 in order to request allocation of an isochronous channel on the IEEE1394 high-speed serial bus 10-1 corresponding to the VPI/VCI allocated to the VCC. At step S26, the ATM/1394 bridge 61-1-1 obtains the isochronous channel on the IEEE1394 high-speed serial bus 10-1 and transmits an IsoRply message to the personal computer 62-1-1. In this case, the ASEL entity of the ATM/1394 bridge 61-1-1 associates the VPI/VCI of the VCC with the isochronous channel in a one-to-one correspondence and registers them to the IsoRply message.

At step S27, the personal computer 62-1-1 sets the Proxy Signaling flag off, which indicates execution of the ATM signaling procedure, in place of the digital video signal 3-1.

At step S28, the personal computer 62-1-1 requests rewrite of oPCR (output Plug Control Register) so as to enable reception of the obtained isochronous channel to the digital video camera 3-1. At step S29, the digital video camera 3-1 carries out setting of the isochronous channel for oPCR. At step S30, the digital video camera 3-1 transmits a response to the effect that the isochronous channel is set for oPCR to the personal computer 62-1-1.

In this manner, connection for digital video data transfer from the digital video camera 3-1 to the digital video cassette recorder 4-1 is established.

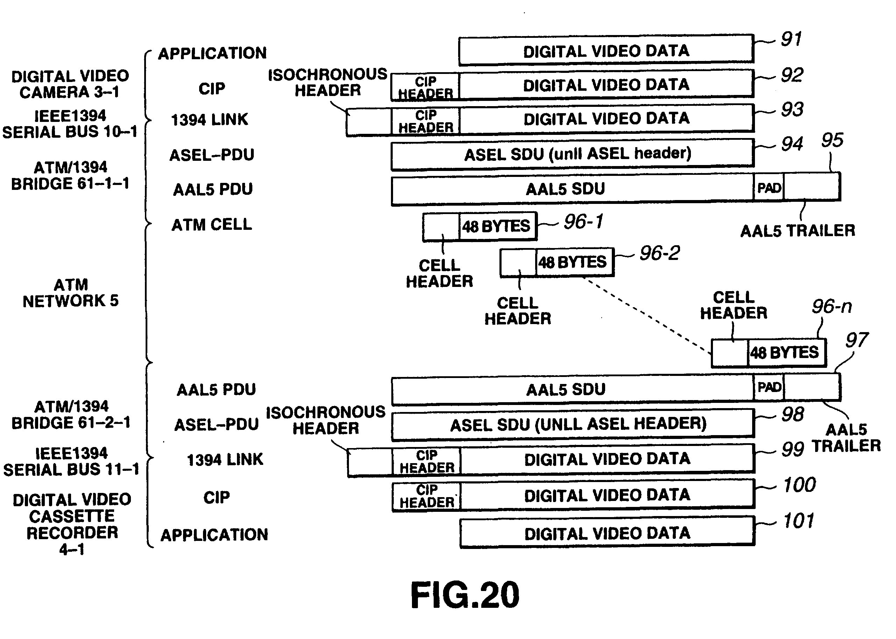

Referring to Fig.20, conversion of data format in transmitting digital video data from the digital video camera 3-1 to the digital video cassette recorder 4-1 according to the present invention will now be described. The digital video camera 3-1 converts digital video data 91 to be transmitted, to a common isochronous packet 92 having a CIP header standardized by the 1394TA appended to its leading part.

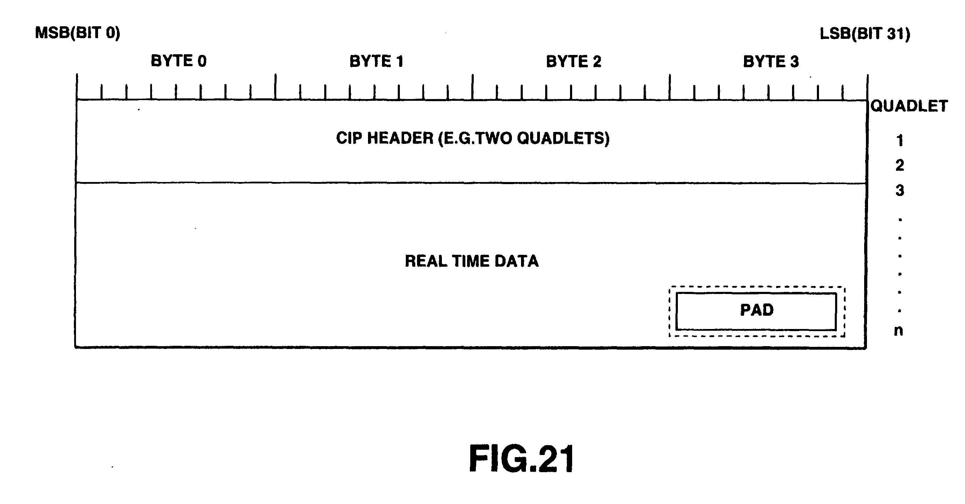

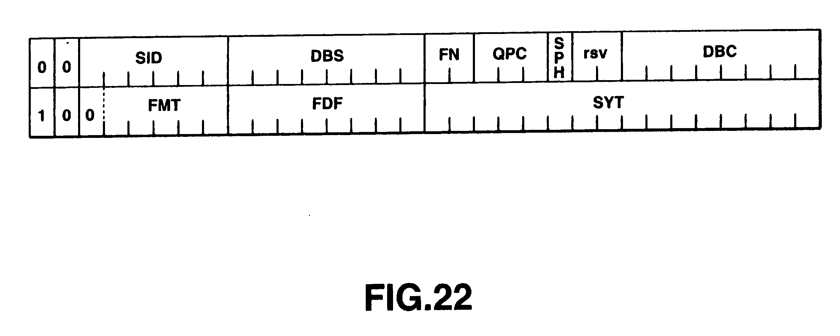

The CIP format is constituted by a CIP header and real-time data as shown in Fig.21, and the CIP header is constituted as shown in Fig.22. The CIP header has an SID (Source node ID) field for storing ID of a node for transmitting data, a DBS (Data Block Size in quadlets) field for storing a value indicating the size of a data block, an FN field expressing the number of division of original data in packetizing, a QPC (Quadlet Padding Count) field for storing the number of paddings, a rsv (reserved) field, an SPH field representing a flag of header of a source packet, a DBC field representing the counter for detecting loss of a packet, an FMT field representing the signal format, an FDF field as a format-dependent field, and an SYT field representing the time stamp for frame synchronization. In the FMT field from among these fields, the value (for example, "000000" for DVCR) of Application Identifier of the remaining six bits in the case where two bits on the MSB side of Optional Mode Information of Fig.14 is "01" (that is, in the case where the CIP format is employed) is described.

Referring again to Fig.20, in order to carry out isochronous communication, the common isochronous packet 92 is converted to an isochronous packet 93 by having an isochronous header appended to its leading part by the link layer entity of the IEEE1394 high-speed serial bus interface of the digital video camera 3-1, and is then transmitted to the ATM/1394 bridge 61-1-1 through the IEEE1394 high-speed serial bus 10-1.

As is clear from the comparison between Fig.20 and Fig.5, in this example, since the IEEE1394 high-speed serial bus 10-1 is a single bus, the personal computer 62-1-1 is not provided for transferring the isochronous packet, and the packet outputted from the digital video camera 3-1 is directly transmitted to the ATM/1394 bridge 61-1-1.

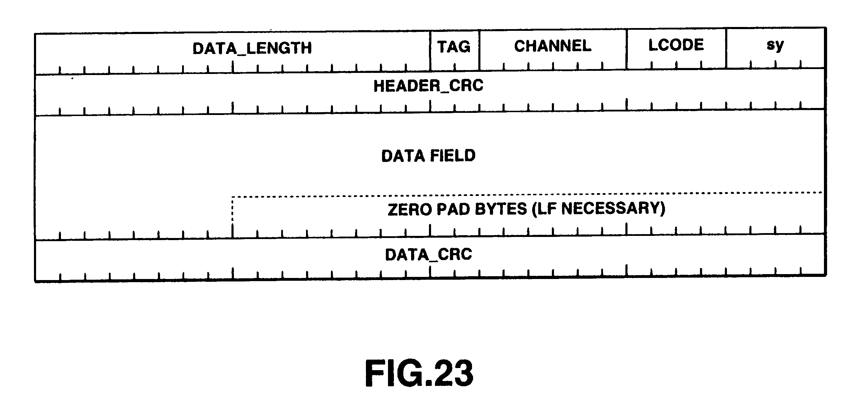

Fig.23 illustrates the configuration of the isochronous packet 93 transmitted on the IEEE1394 high-speed serial bus 10-1. The isochronous header of the isochronous packet 93 has a data_length field for storing the number of bytes of the data to be transmitted, a tag field for storing a label concerning the format of the isochronous packet, and a channel field for storing the channel number on the IEEE1394 high-speed serial bus 10-1. In addition, a transaction code "tcode" for designating the type of packet and type of transaction, a synchronization code "sy" prepared for application-specific control, and a header error detection code "header CRC" are provided in the header.

Referring again to Fig.20, the link layer entity of the IEEE1394 high-speed serial bus interface 114 of the ATM/1394 bridge 61-1-1 removes the isochronous header from the isochronous packet 93 inputted through the IEEE1394 high-speed serial bus 10-1, thus obtaining an ASEL-PDU 94 having no ASEL header.

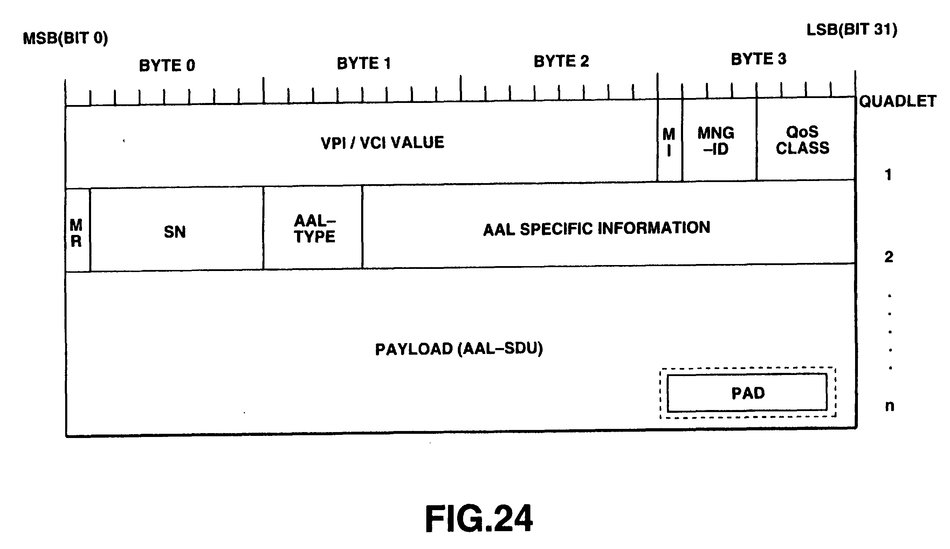

Fig.24 shows the ASEL-PDU format. In its header, a three-byte field VPI/VCI value describing the VPI/VCI value is provided. The first one byte is used for the VPI and the remaining two bytes are used for the VCI. In the MI (Management Indication) field, whether the AAL-SDU is ASEL Layer Management Information or not is described. If its value is 1, the AAL-SDU is ASEL Layer Management Information. If its value is 0, the AAL-SDU is not ASEL Layer Management Information.

In the MNG-ID(Management Identifier) field, "000" for ASEL-CMP, "001" for Segment F5 flow OAM, "010" for End-End F5 flow OAM, or "011" for Resource Management is described.

QoS Class is set as "0000" for UBR Service support, "0001" for CBR Service support, "0010" for VBR Service support, or "0011" for ABR Service support.

The MR (More Indication) field indicates whether the PDU includes the last part of the AAL-SDU or not. If its value is 0, the PDU includes the last part of the AAL-SDU. If its value is 1, the PDU does not include the last part of the AAL-SDU.

The SN (Sequence Number) field indicates the sequence counter of the VPI/VCI. The AAL-Type field is set as "0000" for AAL0, "0001" for AAL1, "0010" for AAL2, "0011" for AAL3/4, or "0101" for AAL5.

In the AAL Specific Information, LP, CI, EL, ER-ID and CPCS-UU are described when the AAL-Type is AAL5.

In the LP (Loss Priority) field, 0 for Low loss Priority or 1 for High loss Priority is described. In the CI (Congestion Indicate) field, 1 for experience of congestion indicate or 0 for no experience of congestion indicate is described. In the EI (Error Indicate) field, 1 for appearance of error or 0 for no appearance of error is described. In the ER-ID (Error Identifier) field, "1000001" for a CPCS CRC error or "1000010" for an error in CPCS-SDU Length is described.

The ATM/1394 bridge 61-1-1 generates an ASEL-SDU (payload) from which the ASEL header portion of the ASEL-PDU format shown in Fig.24 is removed, from the isochronous packet 93.

The AAL5 entity of the ATM/1394 bridge 61-1-1 appends PAD (Padding) and AAL5 trailer to the rear part of the ASEL-SDU 94, thus obtaining an AAL5-PDU 95.

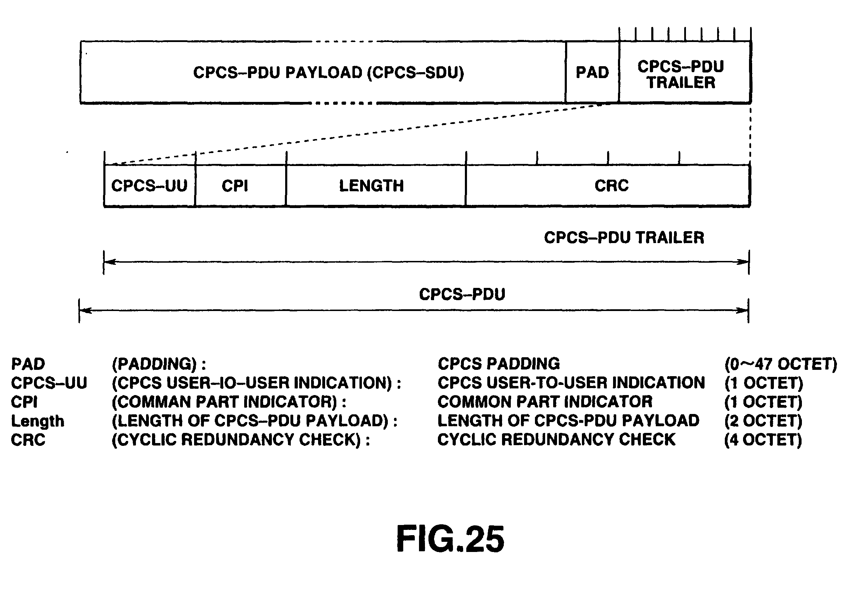

The AAL5 trailer is constituted by a CPCS-UU field for storing information used on an upper layer of the CPCS (Common Part Convergence Sublayer), a CPI (Common Part Indicator) field, a Length field for storing the length of the PDU on the byte basis, and a CRC field for storing data used for error detection, as shown in Fig.25.

Referring again to Fig.20, the ATM layer entity of the ATM interface 115 of the ATM/1394 bridge 61-1-1 divides the AAL5-PDU 95 into units each consisting of 48 bytes, and appends a cell header (VPI/VCI included therein is obtained by the connection control procedure described with reference to Fig. 11) to each unit, thus obtaining ATM cells 96-1 to 96-n. The ATM cells 96-1 to 96-n are transmitted to the ATM network 5 through the UNI and transferred to the ATM/1394 bridge 61-2-1.

The ATM layer entity of the ATM interface 115 of the ATM/1394 bridge 61-2-1 removes the cell headers from the ATM cells 96-1 to 96-n and then connects these ATM cells to generate an AAL5-PDU 97. The AAL5-PDU 97 has its PAD and AAL5 trailer removed by the AAL5 and ASEL entities of the ATM/1394 bridge 61-2-1 and is thus converted to an ASEL-PDU 98 having no ASEL header. An isochronous packet 99 formed by appending an isochronous header to the ASEL-PDU 98 is transmitted to the digital video cassette recorder 4-1 through the IEEE1394 high-speed serial bus 11-1. The digital video cassette recorder 4-1 removes a CIP header from a payload 100 of the isochronous packet 99 and extracts digital video data 101.

In this manner, digital video data can be transmitted from the digital video camera 3-1 to the digital video cassette recorder 4-1 without using the ASEL header.

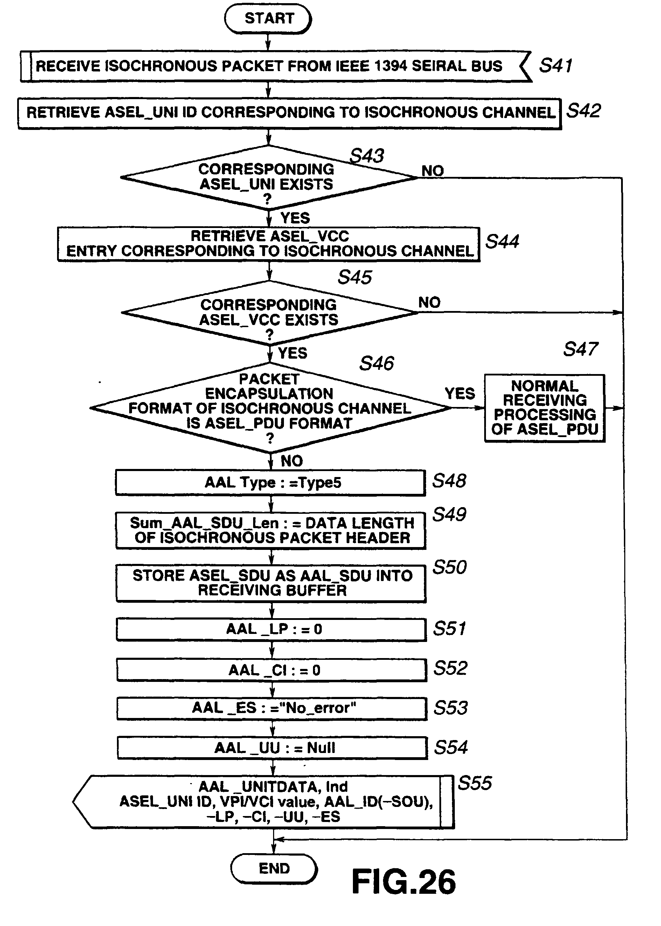

Fig.26 is a flowchart for explaining the operation of the ASEL entity of the ATM/1394 bridge 61-1-1 for receiving and transferring the isochronous packet 93. At step S41,ASEL entity of the ATM/1394 bridge 61-1-1 receives the isochronous packet 93 from the link layer of the IEEE1394 high-speed serial bus interface 114. At step S42, the ASEL entity of the ATM/1394 bridge 61-1-1 retrieves the UNI ID of the ASEL corresponding to the isochronous channel, with reference to a UNI ID table in which the UNI ID is stored in advance at the time of processing of the connection control procedure.

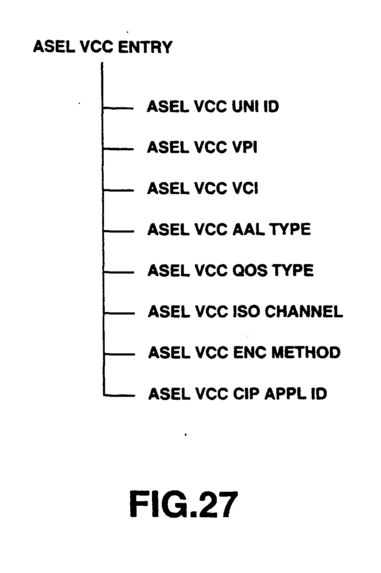

The ASEL manages various information in tree topology as shown in Fig.27. In Asel Vcc Entry of the tree topology, items such as asel Vcc Uni Id, asel Vcc Vpi, asel Vcc Vci, asel Vcc Aal Type, asel Vcc Qos Type, asel Vcc Iso Channel, asel Vec Enc Method, and asel Vcc Cip Appl Id are managed. Of these items, "asel Vcc Uni Id" is the UNI ID in this case. From this UNI ID, the ASEL entity of the ATM/1394 bridge 61-1-1 can recognize the UNI for carrying out communication with the personal computer 62-1-1.

Meanwhile, "asel Vcc Vpi" represents the VPI (virtual path identifier) of the VCC (virtual channel connection) of the ASEL, "asel Vcc Vci" represents the VCI (virtual channel identifier) of the VCC of the ASEL, "asel Vcc Aal Type" represents the type of AAL of the VCC of the ASEL, "asel Vcc Qos Type" represents the type of Qos (quality of service) of the VCC of the ASEL, "asel Vcc Iso Channel" represents the isochronous channel of the VCC of the ASEL, "asel Vcc Enc Method" represents the encoding method of the VCC of the ASEL, and "asel Vcc Cip Appl Id" represents the application ID of the CIP (common isochronous packet) of the VCC of the ASEL.

At step S43, the ASEL entity of the ATM/1394 bridge 61-1-1 discriminates whether a node corresponding to the UNI ID of the ASEL retrieved at step S42 exists or not, on the basis of the storage at the time of processing of the connection control procedure. If it is discriminated that a node corresponding to the UNI ID of the ASEL exists, the procedure shifts to step S44. At step S44, the ASEL entity of the ATM/1394 bridge 61-1-1 retrieves an ASEL_VCC entry corresponding to the isochronous channel. At step S45, the ASEL entity of the ATM/1394 bridge 1394 discriminates whether an ASEL_VCC entry corresponding to the isochronous channel exists or not. If it is discriminated that an ASEL_VCC entry corresponding to the isochronous channel exists, the procedure shifts to step S46.

At step S46, the ASEL entity of the ATM/1394 bridge 61-1-1 discriminates the encapsulation system of the SDU of the isochronous packet 93 on the basis of the storage at the time of processing of the connection control procedure. If it is discriminated that the encapsulation system of the SDU of the isochronous packet 93 is the ASEL-PDU format, the procedure shifts to step S47, where the previously proposed ASEL-PDU receiving processing is executed. That is, in this case, processing is executed on the assumption that the isochronous packet 45 of Fig.5 is received.

If it is discriminated at step S46 that the encapsulation system of the SDU of the isochronous packet 93 is not the ASEL-PDU format, the procedure shifts to step S48. At step S48, the ASEL entity of the ATM/1394 bridge 61-1-1 sets the AAL type to Type 5. At step S49, the ASEL entity of the ATM/1394 bridge 61-1-1 sets a data length stored in the isochronous packet header (Fig.20) for the total length of AAL_SDU. At step S50, the ASEL entity of the ATM/1394 bridge 61-1-1 stores ASEL_SDU as AAL_SDU into a receiving buffer, not shown. At step S51, the ASEL entity of the ATM/1394 bridge 61-1-1 sets the LP parameter to be transferred to the AAL, to "0".

At step S52, the ASEL entity of the ATM/1394 bridge 61-1-1 sets the CI parameter to be transferred to the AAL, to "0" At step S53, the ASEL entity of the ATM/1394 bridge 61-1-1 sets the ES parameter (ES is error information on which EI information is reflected) to be transferred to the AAL, to "No error". At step S54, the ASEL entity of the ATM/1394 bridge 61-1-1 sets the UU parameter to be transferred to the AAL, to "Null". These parameters are set corresponding to the fields described with reference to Fig.24. At step S55, the ASEL entity of the ATM/1394 bridge 61-1-1 outputs a predetermined primitive to the AAL layer.

"AAL_UNITDATA.Ind" of the procedure of step S55 is the primitive described with reference to Fig.2 and includes parameters such as ASEL_UNI ID, VPI/VCI value, AAL_ID (Interface Data) (in the case of AAL5, AAL_ID is equal to AAL_SDU), AAL_LP(Loss Priority), AAL_CI(Congestion Indication), and AAL_UU (User-User Information). AAL_UU is used for transparent information transfer between AAL users and is reflected on the CPCS-UU of Fig.25.

If the procedure of step S55 is completed, if it is discriminated at step S43 that a node corresponding to the UNI ID of the ASEL does not exist, and if it is discriminated at step S45 that an ASEL_VCC entry corresponding to the isochronous channel does not exist, the processing ends.

The procedure of step S55 is the procedure for notifying the upper layer of AAL_UNITDATA.Ind described with reference to Fig.2. After that, an AAL packet is generated. This packet is divided into ATM packets on the upper layer and then transferred.

As described above, the ASEL entity of the ATM/1394 bridge 61-1-1 transfers the isochronous packet 93.

In the operation shown in Fig.11, the personal computer 62-1-1 carries out ATM signaling in place of the digital video camera 3-1 and the personal computer 62-2-1 carries out ATM signaling in place of the digital video cassette recorder 4-1. However, the digital video camera 3-1 may have the same function as the personal computer 62-1-1 and the digital video cassette recorder 4-1 may have the same function as the personal computer 62-2-1.

In such a case, the digital video camera 3-1 and the digital video cassette recorder 4-1 are terminals having the ATM signaling function including ASEL_CMP. In setting the connection, the node unique ID designated by the connection acceptance request is the node unique ID of the digital video camera 3-1 and the digital video cassette recorder 4-1 themselves. Therefore, connection setting is carried out while the Proxy Signaling flag at step S12 and step S14 of Fig.11 remains off. With respect to the transmission/reception band of the parameters set for the ASEL entities of the digital video camera 3-1 and the digital video cassette recorder 4-1, a band which is actually required for the connection is set.

In this specification, the system means the entire device constituted by a plurality of units and devices.

The computer program for carrying out processing as described above is provided on a recording medium such as a magnetic disk, a CD-ROM, or a solid state memory. The computer program may also be provided to the user by using a communication medium such as a network or a satellite.

## Claims

1. A repeating installation in a communication system including a communication device and the repeating installation, the communication device having a function to communicate communication data of a first format using a first communication channel, the repeating installation being connected to the communication device, the repeating installation convening the communication data of the first format received from the communication device to a second format and transmitting the communication data of the second format using a second communication channel, thereby transmitting the communication data to another communication device through another repeating installation as a target, the repeating installation comprising:
first communication means connected to the first communication channel;
second communication means connected to the second communication channel;
first processing means for analyzing communication channel identification information in the first format included in the communication data of the first format;
second processing means for analyzing communication channel identification information of the second format included in the communication data of the second format; and
communication channel identification information storage means for associating with each other communication channel identification information of the communication device and communication channel identification information of said another repeating installation, obtained by communication channel identification information obtaining processing carried out prior to communication of the communication data, and then storing the communication channel identification information;
the first processing means reading out from the communication channel identification information storage means the communication channel identification information of said another repeating installation of said another communication device associated with the communication channel identification information in the first format of the communication data of the first format received by the first communication means;
the second processing means convening the communication data of the first format to the communication data of the second format to which the communication channel identification information of said another repeating installation read out by the first processing means is appended;
the second communication means transmitting the communication data of the second format obtained by the second processing means.

2. The repeating installation as claimed in claim 1, wherein the first processing means supplies data obtained by removing the communication channel identification information included in the communication data of the first format, to the second processing means.

3. The repeating installation as claimed in claim 1, wherein in the communication system, an information processing device is connected between the communication device and the repeating installation through the first communication channel and wherein another information processing device is connected between said another communication device and said another repeating installation through a third communication channel capable of communicating the communication data of the first format, so that the communication channel identification information obtaining processing is carried out by communicating predetermined data with the communication device, the information processing device, said another communication device, said another repeating installation and said another information processing device.

4. The repeating installation as claimed in claim 1, wherein each of the first communication channel and the second communication channel includes an IEEE1394 high-speed serial bus and an ATM network.

5. A repeating method carried out by a repeating installation in a communication system including a communication device and the repeating installation, the method being adapted for converting communication data of a first format received from the communication device having a function to communicate the communication data of the first format using a first communication channel to a second format, then transmitting the communication data of the second format using a second communication channel, and transmitting the communication data to another communication device through another repeating installation as a target, the method comprising:
associating with each other communication channel identification information of the communication device and communication channel identification information of said another repeating installation, obtained by communication channel identification information obtaining processing carried out prior to communication of the communication data, and then storing the communication channel identification information into storage means;
receiving the first communication data from the first communication channel;
reading out from the storage means the communication channel identification information of said another repeating installation of said another communication device associated with the communication channel identification information in the first format of the received communication data of the first format;
converting the communication data of the first format to the communication data of the second format to which the communication channel identification information of said another repeating installation read out from the storage means is appended; and
transmitting the communication data of the second format.

6. A recording medium in which a program for repeating by a repeating installation in a communication system including a communication device and the repeating installation is recorded and which is readable by a computer, the program being adapted for converting communication data of a first format received from the communication device having a function to communicate the communication data of the first format using a first communication channel to a second format, then transmitting the communication data of the second format using a second communication channel, and transmitting the communication data to another communication device through another repeating installation as a target, the program comprising:
associating with each other communication channel identification information of the communication device and communication channel identification information of said another repeating installation, obtained by communication channel identification information obtaining processing carried out prior to communication of the communication data, and then storing the communication channel identification information into storage means;
receiving the first communication data from the first communication channel;
reading out from the storage means the communication channel identification information of said another repeating installation of said another communication device associated with the communication channel identification information in the first format of the received communication data of the first format;
converting the communication data of the first format to the communication data of the second format to which the communication channel identification information of said another repeating installation read out from the storage means is appended; and
transmitting the communication data of the second format.

7. A communication system in which a first communication device and a first repeating installation connected with each other through a first communication channel and a second communication device and a second repeating installation connected with each other through a second communication channel are connected each other through a third communication channel;
the first communication device having a function to communicate communication data of a first format using the first communication channel;
the second communication device having a function to communicate the communication data of the first format using the second communication channel;
the first repeating installation being connected with the first communication device, the first repeating installation converting the communication data of the first format received from the first communication device to communication of a second format and then outputting the communication of the second format to the third communication channel, the first repeating installation converting communication data of the second format from the third communication channel to data of the first format and the outputting the data of the first format to the first communication channel;
the second repeating installation being connected to the second communication device, the second repeating installation converting the communication data of the first format received from the second communication device to the second format and then outputting the communication data of the second format to the third communication channel, the second repeating installation converting communication data of the second format from the third communication channel to data of the first format and then outputting the data of the first format to the second communication channel;
the first repeating installation comprising first communication means connected with the first communication channel, second communication means connected with the third communication channel, first processing means for analyzing communication channel identification information in the first format included in the communication data of the first format, second processing means for analyzing communication channel identification information in the second format included in the communication data of the second format, and first communication channel identification information storage means for associating with each other communication channel identification information of the communication device and communication channel identification information of the second repeating installation obtained by communication channel identification information obtaining processing carried out prior to communication of the communication data;
the first processing means reading out from the first communication channel identification information storage means the communication channel identification information of the second repeating installation of the second communication device associated with the communication channel identification information in the first format of the communication data of the first format received by the first communication means;
the second processing means converting the communication data of the first format to the communication data of the second format to which the communication channel identification information of the second repeating installation read out by the first processing means is appended;
the second communication means transmitting the communication data of the second format obtained by the second processing means;
the second repeating installation comprising third communication means connected with the second communication channel, fourth communication means connected with the third communication channel, third processing means for analyzing the communication channel identification information in the first format included in the communication data of the first format, fourth processing means for analyzing the communication channel identification information of the second format included in the communication data of the second format, and second communication channel identification information storage means for associating with each other the communication channel identification information of the communication device and the communication channel identification information of the first repeating installation obtained by communication channel identification information obtaining processing carried out prior to communication of the communication data;
the third processing means reading out from the second communication channel identification information storage means the communication channel identification information of the second repeating installation of the second communication device associated with the communication channel identification information in the first format of the communication data of the first format received by the third communication means;
the fourth processing means converting the communication data of the first format to the communication data of the second format to which the communication channel identification information of the first repeating installation read out by the third processing means is appended;
the fourth communication means transmitting the communication data of the second format obtained by the fourth processing means.

8. An information processing device connected with another information processing device through a second network from a first network, the information processing device comprising:
designation means for designating whether a format used for communication with said another information processing device and adapted for a processing section for carrying out processing for concealing the first network from an upper hierarchy and interfacing between the first network and the second network is used in a first mode having its header or in a second mode not having the header; and
notification means for notifying said another information processing device of the designation by the designation means.

9. The information processing device as claimed in claim 8, wherein the first network is an IEEE1394 high-speed serial bus, the second network is an ATM network, and the processing section is an ASEL.

10. An information processing method for an information processing device connected with another information processing device through a second network from a first network, the method comprising:
designating whether a format used for communication with said another information processing device and adapted for a processing section for carrying out processing for concealing the first network from an upper hierarchy and interfacing between the first network and the second network is used in a first mode having its header or in a second mode not having the header; and
notifying said another information processing device of the designated mode.

11. A recording medium in which a program is recorded and which is readable by a computer, the program being adapted for causing the computer to execute processing as an information processing device connected with another information processing device through a second network from a first network, the program comprising
designating whether a format used for communication with said another information processing device and adapted for a processing section for carrying out processing for concealing the first network from an upper hierarchy and interfacing between the first network and the second network is used in a first mode having its header or in a second mode not having the header, and notifying said another information processing device of the designated mode.

12. An information processing device connected with first another information processing device through a second network from a first network, the information processing device comprising:
designation means for designating whether a format used for communication with the first another information processing device and adapted for a processing section for carrying out processing for concealing the first network from an upper hierarchy and interfacing between the first network and the second network is used in a first mode having its header or in a second mode not having the header;
notification means for notifying a resource manager of the first network of a resource of the second network used in communication with the first another information processing device together with the mode designated by the designation means; and
storage means for receiving a notification of a resource of the first network allocated from the resource manager of the first network in association with the notification by the notification means and storing the received notification in association with the resource of the second network.

13. The information processing device as claimed in claim 12, wherein the first network is an IEEE1394 high-speed serial bus, the second network is an ATM network, and the processing section is an ASEL.

14. The information processing device as claimed in claim 12, wherein the communication means carries out the notification in place of second another information processing device,
the information processing device further comprising transmission means for transmitting a resource of the first network allocated from a resource manager of the first network to the second another information processing device.

15. An information processing method for an information processing device connected with another information processing device through a second network from a first network, the method comprising:
designating whether a format used for communication with said another information processing device and adapted for a processing section for carrying out processing for concealing the first network from an upper hierarchy and interfacing between the first network and the second network is used in a first mode having its header or in a second mode not having the header;
notifying a resource manager of the first network of a resource of the second network used in communication with said another information processing device together with the designated mode; and
receiving a notification of a resource of the first network allocated from the resource manager of the first network in association with the notification and storing the received notification in association with the resource of the second network.

16. A recording medium in which a program is recorded and which is readable by a computer, the program being adapted for causing the computer to execute processing as an information processing device connected with another information processing device through a second network from a first network, the program comprising:
designating whether a format used for communication with said another information processing device and adapted for a processing section for carrying out processing for concealing the first network from an upper hierarchy and interfacing between the first network and the second network is used in a first mode having its header or in a second mode not having the header;
notifying a resource manager of the first network of a resource of the second network used in communication with said another information processing device together with the designated mode; and
receiving a notification of a resource of the first network allocated from the resource manager of the first network in association with the notification and storing the received notification in association with the resource of the second network.

17. An information processing device connected with a first network and a second network, the information processing device comprising:
receiving means for receiving data of a first format for the first network, inputted through the first network;
generation means for removing a header of the first format from the data of the first format received by the receiving means and generating a payload of a second format for a processing section for carrying out processing for concealing the first network from an upper hierarchy and interfacing between the first network and the second network; and
conversion means for converting the payload of the second format generated by the generation means to a third format for the second network and outputting the convened payload to the second network.

18. The information processing device as claimed in claim 17, wherein the first network is an IEEE1394 high-speed serial bus, the second network is an ATM network, and the processing section is an ASEL.

19. An information processing method for an information processing device connected with a first network and a second network, the method comprising:
receiving data of a first format for the first network, inputted through the first network;
removing a header of the first format from the received data of the first format and generating a payload of a second format for a processing section for carrying out processing for concealing the first network from an upper hierarchy and interfacing between the first network and the second network; and
converting the generated payload of the second format to a third format for the second network and outputting the converted payload to the second network.

20. A recording medium in which a program is recorded and which is readable by a computer, the program being adapted for causing the computer to execute processing as an information processing method for an information processing device connected with a first network and a second network, the program comprising:
receiving data of a first format for the first network, inputted through the first network;
removing a header of the first format from the received data of the first format and generating a payload of a second format for a processing section for carrying out processing for concealing the first network from an upper hierarchy and interfacing between the first network and the second network; and
converting the generated payload of the second format to a third format for the second network and outputting the converted payload to the second network.

21. An information processing device connected with a second network though a first network, the information processing device comprising:
receiving means for receiving data of a first format for the first network, inputted through the first network;
generation means for removing a header of the first format from the data of the first format received by the receiving means and generating a payload of a second format for a processing section for carrying out processing for concealing the second network from an upper hierarchy and interfacing between the first network and the second network; and
conversion means for converting the payload of the second format generated by the generation means to a third format for the second network and outputting the converted payload to the second network.

22. The information processing device as claimed in claim 21, wherein the first network is an ATM network, the second network is an IEEE1394 high-speed serial bus, and the processing section is an ASEL.

23. An information processing method for an information processing device connected with a first network and a second network, the method comprising:
receiving data of a first format for the first network, inputted through the first network;
removing a header of the first format from the received data of the first format and generating a payload of a second format for a processing section for carrying out processing for concealing the second network from an upper hierarchy and interfacing between the first network and the second network; and
converting the generated payload of the second format to a third format for the second network and outputting the converted payload to the second network.

24. A recording medium in which a program is recorded and which is readable by a computer, the program being adapted for causing the computer to execute processing as an information processing device connected with a first network and a second network, the program comprising:
receiving data of a first format for the first network, inputted through the first network;
removing a header of the first format from the received data of the first format and generating a payload of a second format for a processing section for carrying out processing for concealing the second network from an upper hierarchy and interfacing between the first network and the second network; and
converting the generated payload of the second format to a third format for the second network and outputting the converted payload to the second network.

## Amended claims

### Amended claims under Art. 19.1 PCT

1. A repeating installation in a communication system including a communication device and the repeating installation, the communication device having a function to communicate communication data of a first format using a first communication channel, the repeating installation being connected to the communication device, the repeating installation converting the communication data of the first format received from the communication device to a second format and transmitting the communication data of the second format using a second communication channel, thereby transmitting the communication data to another communication device through another repeating installation as a target, the repeating installation comprising:
first communication means connected to the first communication channel;
second communication means connected to the second communication channel;
first processing means for analyzing communication channel identification information in the first format included in the communication data of the first format;
second processing means for analyzing communication channel identification information of the second format included in the communication data of the second format; and
communication channel identification information storage means for associating with each other communication channel identification information of the communication device and communication channel identification information of said another repeating installation, obtained by communication channel identification information obtaining processing carried out prior to communication of the communication data, and then storing the communication channel identification information;
the first processing means reading out from the communication channel identification information storage means the communication channel identification information of said another repeating installation of said another communication device associated with the communication channel identification information in the first format of the communication data of the first format received by the first communication means;
the second processing means being located on a link layer of the first format and carrying out emulation of the second format, thereby converting the communication data of the first format to the communication data of the second format to which the communication channel identification information of said another repeating installation read out by the first processing means is appended;
the second communication means transmitting the communication data of the second format obtained by the second processing means.

2. The repeating installation as claimed in claim 1, wherein the first processing means supplies data obtained by removing the communication channel identification information included in the communication data of the first format, to the second processing means.

3. The repeating installation as claimed in claim 1, wherein in the communication system, an information processing device is connected between the communication device and the repeating installation through the first communication channel and wherein another information processing device is connected between said another communication device and said another repeating installation through a third communication channel capable of communicating the communication data of the first format, so that the communication channel identification information obtaining processing is carried out by communicating predetermined data with the communication device, the information processing device, said another communication device, said another repeating installation and said another information processing device.

4. The repeating installation as claimed in claim 1, wherein each of the first communication channel and the second communication channel includes an IEEE1394 high-speed serial bus and an ATM network.

5. A repeating method carried out by a repeating installation in a communication system including a communication device and the repeating installation, the method being adapted for convening communication data of a first format received from the communication device having a function to communicate the communication data of the first format using a first communication channel to a second format, then transmitting the communication data of the second format using a second communication channel, and transmitting the communication data to another communication device through another repeating installation as a target, the method comprising:
associating with each other communication channel identification information of the communication device and communication channel identification information of said another repeating installation, obtained by communication channel identification information obtaining processing carried out prior to communication of the communication data, and then storing the communication channel identification information into storage means;
receiving the first communication data from the first communication channel;
reading out from the storage means the communication channel identification information of said another repeating installation of said another communication device associated with the communication channel identification information in the first format of the received communication data of the first format;
converting the communication data of the first format to the communication data of the second format to which the communication channel identification information of said another repeating installation read out from the storage means is appended; and
transmitting the communication data of the second format.

6. A recording medium in which a program for repeating by a repeating installation in a communication system including a communication device and the repeating installation is recorded and which is readable by a computer, the program being adapted for convening communication data of a first format received from the communication device having a function to communicate the communication data of the first format using a first communication channel to a second format, then transmitting the communication data of the second format using a second communication channel, and transmitting the communication data to another communication device through another repeating installation as a target, the program comprising:
associating with each other communication channel identification information of the communication device and communication channel identification information of said another repeating installation, obtained by communication channel identification information obtaining processing carried out prior to communication of the communication data, and then storing the communication channel identification information into storage means;
receiving the first communication data from the first communication channel;
reading out from the storage means the communication channel identification information of said another repeating installation of said another communication device associated with the communication channel identification information in the first format of the received communication data of the first format;
carrying out emulation of the second format on a link layer of the first format, thereby converting the communication data of the first format to the communication data of the second format to which the communication channel identification information of said another repeating installation read out from the storage means is appended; and
transmitting the communication data of the second format.

7. A communication system in which a first communication device and a first repeating installation connected with each other through a first communication channel and a second communication device and a second repeating installation connected with each other through a second communication channel are connected each other through a third communication channel;
the first communication device having a function to communicate communication data of a first format using the first communication channel;
the second communication device having a function to communicate the communication data of the first format using the second communication channel;
the first repeating installation being connected with the first communication device, the first repeating installation convening the communication data of the first format received from the first communication device to communication of a second format and then outputting the communication of the second format to the third communication channel, the first repeating installation convening communication data of the second format from the third communication channel to data of the first format and the outputting the data of the first format to the first communication channel;
the second repeating installation being connected to the second communication device, the second repeating installation converting the communication data of the first format received from the second communication device to the second format and then outputting the communication data of the second format to the third communication channel, the second repeating installation converting communication data of the second format from the third communication channel to data of the first format and then outputting the data of the first format to the second communication channel;
the first repeating installation comprising first communication means connected with the first communication channel, second communication means connected with the third communication channel, first processing means for analyzing communication channel identification information in the first format included in the communication data of the first format, second processing means for analyzing communication channel identification information in the second format included in the communication data of the second format, and first communication channel identification information storage means for associating with each other communication channel identification information of the communication device and communication channel identification information of the second repeating installation obtained by communication channel identification information obtaining processing carried out prior to communication of the communication data;
the first processing means reading out from the first communication channel identification information storage means the communication channel identification information of the second repeating installation of the second communication device associated with the communication channel identification information in the first format of the communication data of the first format received by the first communication means;
the second processing means being located on a link layer of the first format and carrying out emulation of the second format, thereby converting the communication data of the first format to the communication data of the second format to which the communication channel identification information of the second repeating installation read out by the first processing means is appended;
the second communication means transmitting the communication data of the second format obtained by the second processing means;
the second repeating installation comprising third communication means connected with the second communication channel, fourth communication means connected with the third communication channel, third processing means for analyzing the communication channel identification information in the first format included in the communication data of the first format, fourth processing means for analyzing the communication channel identification information of the second format included in the communication data of the second format, and second communication channel identification information storage means for associating with each other the communication channel identification information of the communication device and the communication channel identification information of the first repeating installation obtained by communication channel identification information obtaining processing carried out prior to communication of the communication data;
the third processing means reading out from the second communication channel identification information storage means the communication channel identification information of the second repeating installation of the second communication device associated with the communication channel identification information in the first format of the communication data of the first format received by the third communication means;
the fourth processing means being located on a link layer of the first format and carrying out emulation of the second format, thereby converting the communication data of the first format to the communication data of the second format to which the communication channel identification information of the first repeating installation read out by the third processing means is appended;
the fourth communication means transmitting the communication data of the second format obtained by the fourth processing means.

8. An information processing device connected with another information processing device through a second network from a first network, the information processing device comprising:
designation means for designating whether a format used for communication with said another information processing device and adapted for a processing section for carrying out processing for concealing the first network from an upper hierarchy and interfacing between the first network and the second network is used in a first mode having its header or in a second mode not having the header; and
notification means for notifying said another information processing device of the designation by the designation means.

9. The information processing device as claimed in claim 8, wherein the first network is an IEEE1394 high-speed serial bus, the second network is an ATM network, and the processing section is an ASEL.

10. An information processing method for an information processing device connected with another information processing device through a second network from a first network, the method comprising:
designating whether a format used for communication with said another information processing device and adapted for a processing section for carrying out processing for concealing the first network from an upper hierarchy and interfacing between the first network and the second network is used in a first mode having its header or in a second mode not having the header; and
notifying said another information processing device of the designated mode.

11. A recording medium in which a program is recorded and which is readable by a computer, the program being adapted for causing the computer to execute processing as an information processing device connected with another information processing device through a second network from a first network, the program comprising
designating whether a format used for communication with said another information processing device and adapted for a processing section for carrying out processing for concealing the first network from an upper hierarchy and interfacing between the first network and the second network is used in a first mode having its header or in a second mode not having the header, and notifying said another information processing device of the designated mode.

12. An information processing device connected with first another information processing device through a second network from a first network, the information processing device comprising:
designation means for designating whether a format used for communication with the first another information processing device and adapted for a processing section for carrying out processing for concealing the first network from an upper hierarchy and interfacing between the first network and the second network is used in a first mode having its header or in a second mode not having the header;
notification means for notifying a resource manager of the first network of a resource of the second network used in communication with the first another information processing device together with the mode designated by the designation means; and
storage means for receiving a notification of a resource of the first network allocated from the resource manager of the first network in association with the notification by the notification means and storing the received notification in association with the resource of the second network.

13. The information processing device as claimed in claim 12, wherein the first network is an IEEE1394 high-speed serial bus, the second network is an ATM network, and the processing section is an ASEL.

14. The information processing device as claimed in claim 12, wherein the communication means carries out the notification in place of second another information processing device,
the information processing device further comprising transmission means for transmitting a resource of the first network allocated from a resource manager of the first network to the second another information processing device.

15. An information processing method for an information processing device connected with another information processing device through a second network from a first network, the method comprising:
designating whether a format used for communication with said another information processing device and adapted for a processing section for carrying out processing for concealing the first network from an upper hierarchy and interfacing between the first network and the second network is used in a first mode having its header or in a second mode not having the header;
notifying a resource manager of the first network of a resource of the second network used in communication with said another information processing device together with the designated mode; and
receiving a notification of a resource of the first network allocated from the resource manager of the first network in association with the notification and storing the received notification in association with the resource of the second network.

16. A recording medium in which a program is recorded and which is readable by a computer, the program being adapted for causing the computer to execute processing as an information processing device connected with another information processing device through a second network from a first network, the program comprising:
designating whether a format used for communication with said another information processing device and adapted for a processing section for carrying out processing for concealing the first network from an upper hierarchy and interfacing between the first network and the second network is used in a first mode having its header or in a second mode not having the header;
notifying a resource manager of the first network of a resource of the second network used in communication with said another information processing device together with the designated mode; and
receiving a notification of a resource of the first network allocated from the resource manager of the first network in association with the notification and storing the received notification in association with the resource of the second network.

17. An information processing device connected with a first network and a second network, the information processing device comprising:
receiving means for receiving data of a first format for the first network, inputted through the first network;
generation means located on a link layer of the first format and adapted for carrying out emulation of the second format, thereby removing a header of the first format from the data of the first format received by the receiving means and generating a payload of a second format for a processing section for carrying out processing for concealing the first network from an upper hierarchy and interfacing between the first network and the second network; and
conversion means for converting the payload of the second format generated by the generation means to a third format for the second network and outputting the converted payload to the second network.

18. The information processing device as claimed in claim 17, wherein the first network is an IEEE1394 high-speed serial bus, the second network is an ATM network, and the processing section is an ASEL.

19. An information processing method for an information processing device connected with a first network and a second network, the method comprising:
receiving data of a first format for the first network, inputted through the first network;
carrying out emulation of the second format on a link layer of the first format, thereby removing a header of the first format from the received data of the first format and generating a payload of a second format for a processing section for carrying out processing for concealing the first network from an upper hierarchy and interfacing between the first network and the second network; and
converting the generated payload of the second format to a third format for the second network and outputting the converted payload to the second network.

20. A recording medium in which a program is recorded and which is readable by a computer, the program being adapted for causing the computer to execute processing as an information processing method for an information processing device connected with a first network and a second network, the program comprising:
carrying out emulation of the second format on a link layer of the first format, thereby, removing a header of the first format from the data of the first format for the first network received through the first network and generating a payload of a second format for a processing section for carrying out processing for concealing the first network from an upper hierarchy and interfacing between the first network and the second network; and
converting the generated payload of the second format to a third format for the second network and outputting the converted payload to the second network.

21. An information processing device connected with a second network through a first network, the information processing device comprising:
receiving means for receiving data of a first format for the first network, inputted through the first network;
generation means located on a link layer of the first format and adapted for carrying out emulation of the second format, thereby removing a header of the first format from the data of the first format received by the receiving means and generating a payload of a second format for a processing section for carrying out processing for concealing the second network from an upper hierarchy and interfacing between the first network and the second network; and
conversion means for converting the payload of the second format generated by the generation means to a third format for the second network and outputting the converted payload to the second network.

22. The information processing device as claimed in claim 21, wherein the first network is an ATM network, the second network is an IEEE1394 high-speed serial bus, and the processing section is an ASEL.

23. An information processing method for an information processing device connected with a first network and a second network, the method comprising:
receiving data of a first format for the first network, inputted through the first network;
carrying out emulation of the second format on a link layer of the first format, thereby removing a header of the first format from the received data of the first format and generating a payload of a second format for a processing section for carrying out processing for concealing the second network from an upper hierarchy and interfacing between the first network and the second network; and
converting the generated payload of the second format to a third format for the second network and outputting the converted payload to the second network.

24. A recording medium in which a program is recorded and which is readable by a computer, the program being adapted for causing the computer to execute processing as an information processing device connected with a first network and a second network, the program comprising:
carrying out emulation of the second format on a link layer of the first format, thereby removing a header of the first format from the data of the first format for the first network received through the first network and generating a payload of a second format for a processing section for carrying out processing for concealing the second network from an upper hierarchy and interfacing between the first network and the second network; and
converting the generated payload of the second format to a third format for the second network and outputting the converted payload to the second network.
